# EUROPEAN PATENT SPECIFICATION

(11) **EP 0 476 671 B1**
(45) Date of publication and mention of the grant of the patent: **05.11.1997**
(21) Application number: 91115975.4
(22) Date of filing: 19.09.1991
(51) Int. Cl.: C08F 4/76, C07F 7/28, C07F 17/00

(54) **Homogeneous catalysts for olefin polymerization**
Homogene Katalysatoren zum Polymerisieren von Olefinen
Catalyseurs homogènes pour la polymérisation d'oléfines

(30) Priority: 20.09.1990 US 586629
(43) Date of publication of application: 25.03.1992
(60) Divisional application: 96114415.1
(73) Proprietor: THE DOW CHEMICAL COMPANY, Midland, Michigan 48640 (US)
(72) Inventor: Hefner, John G., Lake Jackson, Texas 77566 (US); Kolthammer, Brian W.S., Lake Jackson, Texas 77566 (US); Gifford, Dennis R., West Columbia, Texas 77486 (US)
(74) Representative: Huber, Bernhard, Dipl.-Chem.

(56) References cited:
- EP-A- 0 186 626
- EP-A- 0 224 097
- EP-A- 0 271 874
- WO-A-88/10275
- US-A- 4 046 790
- US-A- 4 567 244
- CHEMICAL ABSTRACTS, vol. 75, no. 2, 12 July 1971, Columbus, Ohio, US, abstract no. 7386n, P.T. Joseph et al.

## Description

The present invention pertains to homogeneous catalyst complexes which are useful with or without the presence of a cocatalyst or activator compound and to a process for polymerizing α-olefins in the presence of these catalysts.

### BACKGROUND OF THE INVENTION

Several examples of homogeneous olefin polymerization catalysts appear in the literature for a variety of transition (W. Kaminsky & R. Steiger in Polyhedron, 1988, vol. 7, no. 22/23, pp. 2375-2381), lanthanide (P. L. Watson in J. Am. Chem. Soc., 1982, vol. 104, no. 1, pp. 337-339) and actinide (P. J. Toscano and T. J. Marks in J. Am. Chem. Soc., 1985, vol. 107, no. 3, pp 653-659) metal complexes. Most of the homogeneous olefin polymerization catalysts reported to date require the use of a soluble cocatalyst such as methylaluminoxanes (MAO). One particular advantage of the homogeneous catalysts is the absence of corrosive components in the formulation and reduction of the number of components required to prepare them, as compared to a typical heterogeneous catalyst. Several disadvantages limit the utility of this method of catalysis in industrial olefin polymerization processes. These include the expense of MAO due to the extremely high ratios of MAO frequently needed to efficiently polymerize olefins, batch to batch variation of the MAO and generally low molecular weight products are obtained which have limited application.

R. F. Jordan in J. Chem. Ed., 1988, vol. 65, no.4, pp 285-289 discloses another form of homogeneous olefin polymerization which includes cationic polymerization catalysts. These polymerization catalysts generally produce polymers with narrow molecular weight distributions and high molecular weights. They generally contain a transition metal component such as titanium or zirconium with a cyclopentadienyl group or other cyclodienyl group and a cation prepared from the reaction with a salt. The complexes are generally very air sensitive and require special handling. The polymerization reaction is very solvent dependent and generally requires solvents, such as methylene chloride, diethyl ether and tetrahydrofuran, not typically used in the industrial preparation of ethylene polymers.

Complexes of the general type LTiX₃ have been disclosed by R. E. Campbell and J. G. Hefner in WO-88/10275 for the preparation of syndiotactic polystyrene where L is a π-bonded group such as cyclopentadienyl or indenyl and X is an alcohol, halide or amide. A cocatalyst is required for the polymerization reaction such as MAO (methylaluminoxane) in a range of Al:Ti atomic ratio of from 50:1 to 10,000:1. For any polymerization reaction it is highly desirable to eliminate or reduce the amount of MAO required as it is expensive and difficult to produce with consistency.

D. F. Birkelbach in U. S. Patent 4,120,820 and U.S. Patent 4,189,553 has also disclosed a more complex mixture for the polymerization of olefins utilizing Ti complexes of the general formula LTiX₃ in which X is a halide and L is an electron donor. The nature of the L group does not describe specifically a n-donor as used in this art. Furthermore, this mixture required components such as a dialkyl magnesium and an alkylaluminum or an alkylaluminum halide in order to produce an active catalyst.

WO 88/10275 discloses an in-situ method for the preparation of the complex "IndenylTi(NMe₂)₃" based upon the reaction of the corresponding Ti-chloride with phenol.

It would be desirable to have available catalysts having one or more of the following characteristics:
1. a reduced number of components required to produce an active catalyst for the polymerization of α-olefins;
2. produces a wide range of polymer molecular weights by varying the process conditions and/or by employing a mixture of two or more of the indenyl or indenide containing catalysts;
3. thermally stable at room temperature;
4. efficient over a broad temperature range; and
5. essentially free of corrosive byproducts;
6. oxidatively stable in the active form;
7. essentially free of pyrophoric components.

### Summary of the invention

One aspect of the present invention pertains to a process for preparing catalytic compounds represented by the formula LTi(NR¹₂)₃ wherein L is a π-bonded ligand selected from the group consisting of indenyl, C₁-C₄ alkyl substituted indenyl, -OSiR₃ substituted indenyl, and each R¹ is the same and is a C₁-C₄ alkyl group which process comprises (1) reacting a compound represented by the formula Ti(NR¹₂)₄ wherein each R¹ is the same and is a C₁ to C₄ alkyl group; with a compound represented by the formula R'(Ind) wherein R' is hydrogen, a C₁ to C₄ alkyl group, -OSiR₃, -OR or a halogen, preferably chlorine, bromine or iodine; R is a C₁-C₄ alkyl group; and Ind is an indenyl group; and (2) recovering the desired product from the reaction mixture.

Another aspect of the present invention pertains to a process for preparing catalytic compounds represented by the formula LTi(NR¹₂)₃ wherein L is a π-bonded ligand selected from the group consisting of indenyl, C₁-C₄ alkyl substituted indenyl, -OSiR₃ substituted indenyl; R is a C₁-C₄ alkyl group; and each R¹ is the same and is a C₁-C₄ alkyl group; which process comprises (1) reacting a compound represented by the formula XTi(NR¹₂)₃ wherein each R¹ is the same and is a C₁ to C₄ alkyl group; with a compound represented by the formula R'M(Ind) wherein M is an alkali metal; R' is hydrogen, a C₁ to C₄ alkyl group, -OSiR₃, -OR or a halogen, preferably chlorine, bromine or iodine; X is a halogen atom, preferably chlorine, bromine or iodine; and Ind is an indenyl group; and (2) recovering the desired product form the reaction mixture.

Another aspect of the present invention pertains to a process for preparing compounds represented by the formula LTi(NR¹₂)X₂ wherein L is a π-bonded ligand selected from the group consisting of indenyl, C₁-C₄ alkyl substituted indenyl, -OSiR₃ substituted indenyl; each R¹ is the same and is a C₁-C₄ alkyl group; and X is a halogen, preferably chlorine, bromine or iodine; which process comprises (1) reacting a compound represented by the formula Ti(NR¹₂)X₃; wherein R¹ is a C₁-C₄ alkyl group; with a compound represented by the formula R'M(Ind) wherein R' is a hydrogen, a C₁-C₄ alkyl group, -OSiR₃, -OR or a halogen, preferably chlorine, bromine or iodine; R is a C₁-C₄ alkyl group; Ind is an indenyl group; and M is an alkali metal; and (2) recovering the desired product from the reaction mixture.

Another aspect of the present invention pertains to a process for preparing compounds represented by the formula LTi(NR¹₂)(NR²₂)X wherein L is a π-bonded ligand selected from the group consisting of indenyl, C₁-C₄ alkyl substituted indenyl, -OSiR₃ substituted indenyl; R¹ and R² are different and each R¹ and R² is independently a C₁-C₄ alkyl group; and X is a halogen, preferably chlorine, bromine or iodine; which process comprises (1) reacting any two compounds selected from the group consisting of (a) a compound represented by the formula Ti(NR¹₂)X₃, (b) M(NR²₂), and (c) R'(Ind)M wherein R' is hydrogen, a C₁-C₄ alkyl group, -OSiR₃, -OR or a halogen, preferably chlorine, bromine, or iodine, Ind is an indenyl group, M is an alkali metal, and R is a C₁-C₄ alkyl group; (2) separating the reaction product from the reactants; (3) reacting the product from step (2) with the component (b) or (c) not reacted in step (1); and (4) recovering the desired product.

Another aspect of the present invention pertains to a process for preparing catalytic compounds represented by the formula LTi(NR¹₂)₂(NR²₂) wherein L is a π-bonded ligand selected from the group consisting of indenyl, C₁-C₄ alkyl substituted indenyl, -OSiR₃ substituted indenyl; R¹ and R² are different and each R¹ and R² is independently a C₁-C₄ alkyl group; and X is a halogen, preferably chlorine, bromine or iodine; which process comprises (1) reacting any two compounds selected from the group consisting of (a) a compound represented by the formula TiX₂(NR¹₂)₂, (b) M(NR²₂), and (c) R'(Ind)M wherein R' is hydrogen, a C₁-C₄ alkyl group, -OSiR₃, -OR or a halogen, preferably chlorine, bromine, or iodine, Ind is an indenyl group, M is an alkali metal, and R is a C₁-C₄ alkyl group; (2) separating the reaction product from the reactants; (3) reacting the product from step (2) with the component (b) or (c) not reacted in step (1); and (4) recovering the desired product.

Another aspect of the present invention pertains to a process for preparing catalytic compounds represented by the formula LTi(NR¹₂)(NR²₂)(NR³₂) wherein L is a n-bonded ligand selected from the group consisting of indenyl, C₁-C₄ alkyl substituted indenyl, -OSiR₃ substituted indenyl; and R¹, R² and R³ are different and are independently a C₁-C₄ alkyl group; which process comprises (1) reacting a compound represented by any one of the formula LTi(NR¹₂)(NR²₂)X wherein R¹ and R², are different and are each independently a C₁-C₄ alkyl group; X is a halogen, preferably chlorine, bromine or iodine; and L is as defined above; with a compound represented by the formula M(NR³₂) wherein R³ is a C₁-C₄ alkyl group different from R¹ and R², and M is Li, Na or K; and (2) recovering the desired product.

The present invention may suitably comprise, consist of, or consist essentially of, the aforementioned components.

The invention illustratively disclosed herein suitably may be practiced in the absence of any component which is not specifically disclosed or enumerated herein.

### Definitions

The term oligomers of cyclopentadiene means those oligomers having from 10 to 30 carbon atoms per molecule and any combination of such oligomers.

### Catalysts where all of the R groups attached to any nitrogen atom are the same

The catalysts represented by the formula LTi(NR₂)₃ wherein the R¹ groups are the same can be prepared by either of two independent methods.

In a first method, a titanium tetrakis(dialkylamide) represented by the formula Ti(NR₂)₄ wherein each R is independently a C₁ to C₄ alkyl group is reacted with indene or a substituted indene at a temperature from -78°C to reflux, preferably from 0°C to reflux temperature, more preferably by combining the reagents at room temperature and then refluxing for a time sufficient to complete the reaction, usually from 0.5 to 48, preferably from 1 to 35, more preferably from 5 to 24, hours in the presence of a suitable solvent or reaction medium such as aliphatic or aromatic hydrocarbons or other such medium which is inert to either the reactants or reaction product. The preferred solvents are toluene, benzene, hexane, heptane, octane, isooctane, nonane, decane, kerosene, or any combination thereof.

The desired product can be recovered from the reaction mixture by any suitable means such as removing volatile solvents or reaction media by vacuum distillation of the residue, if desired.

Higher reaction temperatures will require less time to complete the desired reaction whereas lower temperatures will require more time to complete the desired reaction; provided that the temperature is maintained below the decomposition temperature of any of the reactants or reaction products.

The solvent is chosen so that the reflux temperature of the reaction mixture does not exceed 150°C.

In the foregoing preparation method, at temperatures below -78°C, the exchange reaction of the acidic proton of indene is slow and reaction yields are generally low within the described reaction time.

In the foregoing preparation method, at temperatures above 150°C, many of the organometallic reactants will begin to undergo thermal decomposition.

In a second method, a titanium tris(dialkylamide)halide represented by the formula XTi(NR¹₂)₃ wherein R¹ and X are defined above is reacted with a metallated indene or substituted indene represented by the formula M(Ind)R' wherein M is an alkali metal such as Li, Na or K, and R' and Ind are as defined above at a temperature of from -78°C to the reflux temperature, preferably from 0°C to reflux temperature, more preferably by combining the reactants at room temperature (about 25°C) and refluxing for a time sufficient to complete the reaction, usually from 0.1 to 12, preferably from 0.2 to 6, more preferably from 0.5 to 1, hours. The reaction is conducted in the presence of a suitable solvent or reaction medium which does not react with either the reactants or the reaction product. Suitable such solvents include, for example, aliphatic or aromatic hydrocarbons, glycol ethers or cyclic and acyclic ethers, combinations thereof. Particularly suitable such solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product(s) can be extracted from the reaction mixture with a suitable hydrocarbon such as pentane, hexane, heptane or toluene.

The desired product can be recovered from the reaction mixture by any suitable means such as filtering from the alkali metal salts, solvent extraction, decanting, or vacuum distillation, or any combination thereof.

Higher reaction temperatures will require less time to complete the desired reaction whereas lower temperatures will require more time to complete the desired reaction; provided that the temperature is maintained below the decomposition temperature of the reactants or reaction products.

The solvent is chosen so that the reflux temperature of the reaction mixture does not exceed 150°C.

In the foregoing preparation method, at temperatures below -78°C, the salt elimination reaction is slow and reaction yields are generally low within the described reaction time.

In the foregoing preparation method, at temperatures above about 150°C, many of the organometallic reactants will begin to undergo thermal decomposition.

### Catalysts wherein all of the R groups attached to a single nitrogen atom are the same, but the R atoms attached to nitrogen atoms are different in at least two of the nitrogen atoms

The catalysts of the present invention are prepared by different methods depending on the type of ligand employed and the number of different amide groups desired on the central metal ion.

In the first method, a dihalotitanium bis(dialkylamide) represented by the formula X₂Ti(NR¹₂)₂ wherein R¹ is a C₁-C₄ alkyl group and X is a halogen, preferably chlorine, bromine or iodine is reacted with a metallated indene or substituted indene represented by the formula M(Ind)R' wherein M is an alkali metal such as Li, Na or K, and R' is hydrogen, C₁-C₄ alkyl group,-OSiR₃, R is a C₁-C₄ alkyl group, and Ind is indenyl or indenide as appropriate at a temperature of from -100°C to the reflux temperature of the reaction mixture, preferably from -78°C to reflux temperature, more preferably by combining the reactants at -78°C and refluxing for a time sufficient to complete the reaction, usually from 0.1 to 12, preferably from 0.2 to 6, more preferably from 0.5 to 1 hours. The reaction is conducted in the presence of a suitable solvent or reaction medium which does not react with either the reactants or the reaction product. Suitable solvents include, for example, aliphatic or aromatic hydrocarbons, glycol ethers or cyclic and acyclic ethers, or any combination thereof. Particularly suitable solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product can be extracted from the reaction mixture with a suitable hydrocarbon such as pentane, hexane, heptane, benzene or toluene. The product is then crystallized from a suitable solvent such as that used for extraction at reduced temperature or by reducing the solvent volume with the most preferred method being a combination of both techniques. The next step involves reaction of the indenyltitanium bis(dialkylamide)halide represented by the formula (Ind)Ti(NR¹₂)₂X wherein R¹, X and Ind is defined as above with a metallated amide represented by the formula M(NR²₂) wherein M is an alkali metal selected such as Li, Na or K and R² is a C₁-C₄ alkyl group, each R² is the same but different from R¹ and is a C₁-C₄ alkyl group; at a temperature of from -100°C to the reflux temperature of the reaction mixture, preferably from - 78°C to reflux temperature, more preferably by combining the reactants at -78°C and refluxing for a time sufficient to complete the reaction, usually from 0.1 to 12 hours, preferably from 0.2 to 6, more preferably from 0.5 to 1 hours. The reaction is conducted in the presence of a suitable solvent or reaction medium which does not react with either the reactants or the reaction product. Suitable solvents include, for example, aliphatic or aromatic hydrocarbons, glycol ethers or cyclic and acyclic ethers, or any combination thereof. Particularly suitable solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product can be extracted from the reaction mixture with a suitable hydrocarbon such as pentane, hexane, heptane, benzene or toluene.

The desired product can be recovered from the reaction mixture by any suitable means such as filtering from the alkali metal salts, solvent extraction, decanting, vacuum distillation, or any combination thereof.

Higher reaction temperatures will require less time to complete the desired reaction whereas lower temperatures will require more time to complete the desired reaction; provided that the temperature is maintained below the decomposition temperature of the reactants or reaction products.

The solvent is chosen so that the reflux temperature of the reaction mixture does not exceed 150°C.

In the foregoing preparation method, at temperatures below -100°C the salt elimination reaction is slow and reaction yields are generally low within the described reaction time.

In the foregoing preparation method, at temperatures above 150°C many of the organometallic reactants will begin to undergo thermal decomposition.

In the second method, a trihalotitanium dialkylamide represented by the formula X₃Ti(NR¹₂) wherein R¹ is a C₁-C₄ alkyl group and X is a halogen such as chlorine, bromine or iodine is reacted with a metallated indene or substituted indene represented by the formula M(Ind)R' wherein M is an alkali metal such as Li, Na or K and R' is a hydrogen, C₁-C₄ alkyl group, -OSIR₃, R is a C₁-C₄ alkyl group, and Ind is indene at a temperature of from -100°C to reflux temperature, preferably from -78°C to reflux temperature, more preferably by combining the reactants at -78°C and refluxing for a time sufficient to complete the reaction, usually from 0.1 to 12, preferably from 0.2 to 6, more preferably from 0.5 to 1 hours. The reaction is conducted in the presence of a suitable solvent or reaction medium which does not react with either the reactants or the reaction product. Suitable solvents include, for example, aliphatic or aromatic hydrocarbons, glycol ethers or cyclic and acyclic ethers, or any combination thereof. Particularly suitable solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product can be extracted from the reaction mixture with a suitable hydrocarbon such as pentane, hexane, heptane, benzene or toluene. The product is then crystallized from a suitable solvent such as that used for extraction at reduced temperature or by reducing the solvent volume with the most preferred method being a combination of both techniques. The next step involves the reaction of the indenyltitanium (dialkylamide)dihalide represented by the formula R'(Ind)Ti(NR¹₂)X₂ wherein R', R¹, X and Ind is defined as above with 2 equivalents of a metallated amide represented by the formula M(NR²₂) wherein M is an alkali metal such as Li, Na or K and R² is a C₁-C₄ alkyl group at a temperature of from -100°C to the reflux temperature, preferably from -78°C to reflux temperature, more preferably by combining the reactants at -78°C and refluxing for a time sufficient to complete the reaction, usually from 0.1 to 12 hours, preferably from 0.2 to 6, more preferably from 0.5 to 1 hours. The reaction is conducted in the presence of a suitable solvent or reaction medium which does not react with either the reactants or the reaction product. Suitable solvents include, for example, aliphatic or aromatic hydrocarbons, glycol ethers or cyclic and acyclic ethers, or any combination thereof. Particularly suitable solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product can be extracted from the reaction mixture with a suitable hydrocarbon such as pentane, hexane, heptane, benzene or toluene.

The desired product can be recovered from the reaction mixture by any suitable means such as filtering from the alkali metal salts, solvent extraction, decanting, vacuum distillation, or any combination thereof.

Higher reaction temperatures will require less time to complete the desired reaction whereas lower temperatures will require more time to complete the desired reaction; provided that the temperature is maintained below the decomposition temperature of the reactants or reaction products.

The solvent is chosen so that the reflux temperature of the reaction mixture does not exceed 150°C.

In the foregoing preparation method, at temperatures below -100°C the salt elimination reaction is slow and reaction yields are generally low within the described reaction time.

In the foregoing preparation method, at temperatures above 150°C many of the organometallic reactants will begin to undergo thermal decomposition.

In the third method a disproportionated dihalotitanium (dialkylamide)(dialkylamide') represented by the formula X₂Ti(NR¹₂)(NR²₂) wherein R¹ and R² are independently C₁-C₄ alkyl groups where each R¹ and each R² is the same, but each R¹ is different from each R², and X is a halogen, preferably chlorine, bromine or iodine is reacted with a metallated indene represented by the formula M(Ind)R' wherein M is an alkali metal such as Li, Na or K, and R' is hydrogen, a C₁-C₄ alkyl group, -OSiR3, and R is a C₁-C₄ alkyl group, and Ind is defined as indene at a temperature of from -100°C to reflux temperature, preferably from -78°C to reflux temperature, more preferably by combining the reactants at -78°C and refluxing for a time sufficient to complete the reaction, usually from 0.1 to 12, preferably from 0.2 to 6, more preferably from 0.5 to 1 hours. The reaction is conducted in the presence of a suitable solvent or reaction medium which does not react with either the reactants or the reaction product. Suitable solvents include, for example, aliphatic or aromatic hydrocarbons, glycol ethers or cyclic and acyclic ethers, or any combination thereof. Particularly suitable solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product can be extracted from the reaction mixture with a suitable hydrocarbon such as pentane, hexane, heptane, benzene or toluene. The product is then crystallized from a suitable solvent such as that used for extraction at reduced temperature or by reducing the solvent volume with the most preferred method being a combination of both techniques. The next step involves the reaction of the indenyltitanium (dialkylamide)(dialkylamide')halide represented by the formula (Ind)Ti(NR¹₂)(NR²₂)X wherein R¹, R² and Ind is defined as above with a metallated amide represented by the formula M(NR³₂) wherein M is an alkali metal such as Li, Na or K and R³ is a C₁-C₄ alkyl group; and R¹, R² and R³ are different but each R¹, each R² and each R³ are the same; at a temperature of from - 100°C to the reflux temperature, preferably from -78°C to reflux temperature, more preferably by combining the reactants at -78°C and refluxing for a time sufficient to complete the reaction, usually from 0.1 to 12 hours, preferably from 0.2 to 6, more preferably from 0.5 to 1 hours. The reaction is conducted in the presence of a suitable solvent or reaction medium which does not react with either the reactants or the reaction product. Suitable solvents include, for example, aliphatic or aromatic hydrocarbons, glycol ethers or cyclic and acyclic ethers, or any combination thereof. Particularly suitable solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product can be extracted from the reaction mixture with a suitable hydrocarbon such as pentane, hexane, heptane, benzene or toluene.

The desired product can be recovered from the reaction mixture by any suitable means such as filtering from the alkali metal salts, solvent extraction, decanting, vacuum distillation, or any combination thereof.

Higher reaction temperatures will require less time to complete the desired reaction whereas lower temperatures will require more time to complete the desired reaction provided that the temperature is maintained below the decomposition temperature of the reactants or reaction products.

The solvent is chosen so that the reflux temperature of the reaction mixture does not exceed 150°C.

In the foregoing preparation method, at temperatures below -100°C the salt elimination reaction is slow and reaction yields are generally low within the described reaction time.

In the foregoing preparation method, at temperatures above 150°C many of the organometallic reactants will begin to undergo thermal decomposition.

In the fourth method a trihalotitanium dialkylamide represented by the formula X₃Ti(NR¹₂) wherein R¹ is a C₁-C₄ alkyl group and X is a halogen atom such as chlorine, bromine or iodine is reacted with a metallated indene represented by the formula M(Ind)R' wherein M is an alkali metal such as Li, Na or K and R' is a hydrogen, C₁-C₄ alkyl group, -OSiR3 and Ind is defined as indene at a temperature of from -100°C to reflux temperature, preferably from -78°C to reflux temperature, more preferably by combining the reactants at -78°C and refluxing for a time sufficient to complete the reaction, usually from 0.1 to 12, preferably from 0.2 to 6, more preferably from 0.5 to 1 hours. The reaction is conducted in the presence of a suitable solvent or reaction medium which does not react with either the reactants or the reaction product. Suitable solvents include, for example, aliphatic or aromatic hydrocarbons, glycol ethers or cyclic and acyclic ethers, or any combination thereof. Particularly suitable solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product can be extracted from the reaction mixture with a suitable hydrocarbon such as pentane, hexane, heptane, benzene or toluene. The product is then crystallized from a suitable solvent such as that used for extraction at reduced temperature or by reducing the solvent volume with the most preferred method being a combination of both techniques. The next step involves reaction of the indenyltitanium (dialkylamide)dihalide represented by the formula (Ind)Ti(NR¹₂)X₂ wherein R¹, X and Ind is defined as above with a metallated amide represented by the formula M(NR²₂) wherein M is an alkali metal such as Li, Na of K and R² is a C₁-C₄ alkyl group and each R¹ and each R² are the same but R¹ and R² are different at a temperature of from -100°C to the reflux temperature, preferably from -78°C to reflux temperature, more preferably by combining the reactants at -78°C and refluxing for a time sufficient to complete the reaction, usually from 0.1 to 12 hours, preferably from 0.2 to 6, more preferably from 0.5 to 1 hours. The reaction is conducted in the presence of a suitable solvent or reaction medium which does not react with either the reactants or the reaction product. Suitable solvents include, for example, aliphatic or aromatic hydrocarbons, glycol ethers or cyclic and acyclic ethers, or any combination thereof. Particularly suitable solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product can be extracted from the reaction mixture with a suitable hydrocarbon such as pentane, hexane, heptane, benzene or toluene or the product need not be isolated for the next reaction step. The next step involves reaction of indenyltitanium (dialkyl¹amide)(dialkyl²amide)halide represented by the formula (Ind)Ti(NR¹₂)(NR²₂)X wherein R¹, R², X and Ind is defined as above with a metallated amide represented by the formula M(NR³₂) wherein M is an alkali metal selected from the group Li, Na or K, R is a C₁-C₄ alkyl group, and each R³ is a C₁-C₄ alkyl group different from R¹ and R² at a temperature of from -100°C to the reflux temperature, preferably from -78°C to reflux temperature, more preferably by combining the reactants at -78°C and refluxing for a time sufficient to complete the reaction, usually from 0.1 to 12 hours, preferably from 0.2 to 6, more preferably from 0.5 to 1 hours. The reaction is conducted in the presence of a suitable solvent or reaction medium which does not react with either the reactants or the reaction product. Suitable solvents include, for example, aliphatic or aromatic hydrocarbons, glycol ethers or cyclic and acyclic ethers, or any combination thereof. Particularly suitable solvents include, for example, pentane, hexane, toluene, benzene, diethyl ether, tetrahydrofuran, glyme, diglyme, dimethoxyethane, or any combination thereof. The most preferred solvent is diethyl ether. The desired reaction product can be extracted from the reaction mixture with a suitable hydrocarbon such as pentane, hexane, heptane, benzene or toluene.

The desired product can be recovered from the reaction mixture by any suitable means such as filtering from the alkali metal salts, solvent extraction, decanting, vacuum distillation, or any combination thereof.

Higher reaction temperatures will require less time to complete the desired reaction whereas lower temperatures will require more time to complete the desired reaction; provided that the temperature is maintained below the decomposition temperature of the reactants or reaction products.

The solvent is chosen so that the reflux temperature of the reaction mixture does not exceed 150°C.

In the foregoing preparation method, at temperatures below -100°C the salt elimination reaction is slow and reaction yields are generally low within the described reaction time.

In the foregoing preparation method, at temperatures above 150°C many of the organometallic reactants will begin to undergo thermal decomposition.

It is generally understood that several reaction products are obtained due to side reactions when preparing complexes involving two dialkylamide ligands in which the alkyl group is n-propyl or n-butyl. Also, many products are observed in the preparation of complexes containing three different dialkylamide groups. These are generally reactions due to reductive elimination of the halide from the transition metal which is not followed by oxidative addition of the amide group. It is evident, spectroscopically, that paramagnetic components are present in the reaction mixtures indicating that reductive elimination occurs.

Particularly suitable catalysts wherein the π-bonded ligand is indenyl or substituted indenyl which can be employed herein, include, for example, indenyltitanium tris(dimethylamide), indenyltitanium tris(diethylamide), indenyltitanium tris(di-n-propylamide), indenyltitanium tris(di-n-butylamide), indenyltitanium bis(dimethylamide)(diethylamide), indenyltitanium bis(dimethylamide)(di-n-propylamide), indenyltitanium bis(dimethylamide)(di-n-butylamide) indenyltitanium bis(diethylamide)(dimethylamide), indenyltitanium bis(diethylamide)(di-n-propylamide), indenyltitanium bis(diethylamide)(di-n-butylamide), indenyltitanium bis(di-n-propylamide)(dimethylamide), indenyltitanium bis(di-n-propylamide)(diethylamide), indenyltitanium bis(di-n-propylamide)(di-n-butylamide), indenyltitanium bis(di-n-butylamide)(dimethylamide), indenyltitanium bis(di-n-butylamide)(diethyamide), indenyltitanium bis(di-n-butylamide)(di-n-propylamide), indenyltitanium (dimethylamide)(diethyamide)(di-n-propylamide), indenyltitanium (diethylamide)(di-n-propylamide)(di-n-butylamide), indenyltitanium (dimethylamide)(di-n-propylamide)(di-n-butylamide), indenyltitanium (dimethylamide)(diethylamide)(di-n-butylamide), or any combination thereof.

Particularly suitable catalysts wherein the π-bonded ligand is cyclopentadienyl or C₁-C₄ substituted cyclopentadienyl or oligomer of cyclopentadiene or C₁-C₄ substituted oligomer of cyclopentadiene which can be employed herein include, for example, cyclopentadienyltitanium tris(dimethylamide), cyclopentadienyltitanium tris(diethylamide), cyclopentadienyltitanium tris(di-n-propylamide), cyclopentadienyltitanium tris(di-n-butylamide), methylcyclopentadienyltitanium tris(dimethylamide), methylcyclopentadienyltitanium tris(diethylamide), methylcyclopentadienyltitanium tris(di-n-propylamide), methylcyclopentadienyltitanium tris(di-n-butylamide), pentamethylcyclopentadienyltitanium tris(dimethylamide), pentamethylcyclopentadienyltitanium tris(diethylamide), pentamethylcyclopentadienyltitanium tris(di-n-propylamide), pentamethylcyclopentadienyltitanium tris(di-n-butylamide), or any combination thereof.

Particularly suitable catalysts wherein the π-bonded ligand is fluorenyl or C₁-C₄ substituted fluorenyl include, for example, fluorenyltitanium tris(dimethylamide), fluorenyltitanium tris(diethylamide), fluorenyltitanium tris(di-n-propylamide), fluorenyltitanium tris(di-n-butylamide), or any combination thereof.

Suitable α-olefins which can be employed herein include, for example, those having from 2 to 20, preferably from 2 to 10, more preferably from 2 to 8 carbon atoms. Particularly suitable such α-olefins include, for example, ethylene, propylene, butene-1, pentene-1, hexene-1, 4-methyl-pentene-1, heptene-1, octene-1, nonene-1, decene-1, undecene-1, tridecene-1, tetradecene-1, 3-methylbutene-1, any combination of any two or more monomers which do not destroy the catalyst.

Suitable polymerizable ethylenically unsaturated monomers which can be copolymerized with any one or more of the aforementioned α-olefins include, for example, dienes; ethylenically unsaturated nitriles; unsaturated aliphatic or halogen substituted aromatic compounds; or any combination of any two or more such polymerizable monomers. Particularly suitable such polymerizable ethylenically unsaturated monomers include, for example, butadiene, neoprene, isoprene, chloroprene, 1,7-octadiene, 1,4-hexadiene, acrylonitrile, methacrylonitrile, styrene, 4-methyl styrene, chlorostyrene, bromostyrene, or any combination of any two or more such polymerizable monomers.

The catalyst wherein the π-bonded ligand is indenyl or substituted indenyl can be employed in conjunction with a cocatalyst or activator compound, if desired, although such cocatalyst or activator compound is not required. Suitable such cocatalysts or activator compounds include, for example, methylaluminoxane.

When these cocatalysts or activator compounds are employed, they are employed in amounts which provide an atomic ratio of the metal present in the cocatalyst or activator compound to Ti of from 0.001:1 to 10,000:1, preferably from 0.01:1 to 5,000:1, more preferably from 0.1:1 to 1,000:1.

When employed, the cocatalyst or activator compound can be mixed with the titanium-containing catalyst prior to being introduced into the polymerization reactor or the cocatalyst or activator compound and the titanium-containing catalyst can be added separately to the polymerization reactor.

The polymerization can be conducted under slurry, solution or gas phase conditions.

The polymerization process can be conducted at temperatures of from 0°C to 250°C, preferably from 25°C to 200°C, more preferably from 40°C to 170°C. For polymerization under solution conditions, the temperature is usually in the range of from 120°C to 250°C, preferably from 130°C to 200°C, more preferably from 140°C to 170°C. For polymerization under slurry conditions, the temperature is usually in the range of from 0°C to 100°C, preferably from 25°C to 95°C, more preferably from 50°C to 90°C.

The polymerization process can be conducted at pressures of from 5 psig (0.17 kg/m²) to 10,000 psig (399 kg/m²), preferably from 50 psig (1.7 kg/m²) to 1,000 psig (33.9 kg/m²), more preferably from 100 psig (3.39 kg/m²) to 700 psig (23.73 kg/m²).

Suitable diluents which can be employed as the polymerization medium in the solution process for polymerizing α-olefins include, for example, liquefied aliphatic hydrocarbons having from 2 to 15, preferably from 4 to 12, more preferably from 6 to 10, carbon atoms; aromatic or alkyl substituted aromatic hydrocarbons having from 6 to 12 carbon atoms; or any combination thereof.

The polymerization can be conducted in the presence of hydrogen or other known molecular weight control methods such as comonomer concentration, reactor temperature, monomer/solvent ratio, or any combination thereof. These molecular weight control methods are employed in functionally equivalent amounts, i.e. those amounts which will result in the polymer having the desired molecular weight or melt index or melt flow rate values, which values are indicative of relative molecular weights i.e. the higher the melt index value, the lower the molecular weight.

The following examples are illustrative of the present invention, but are not to be construed as to limiting the scope thereof in any manner.

### GENERAL PROCEDURES

The following practices and procedures were employed in all of the preparative examples.

All complexes were prepared under dry nitrogen which was passed through a column of reduced chromium on silica to remove the last traces of water and oxygen. Hexane and diethyl ether were distilled from the Na/K benzophenone ketal radical anion under nitrogen. Toluene was distilled from either Na or Na/K alloy under nitrogen. All solvents were degassed prior to use. Manipulations were performed using standard Schlenk and vacuum line techniques.

n-Butyllithium, titanium tetrachloride and indene were purchased from Aldrich Chemical Co. and used without further purification. Diethylamine and dipropylamine were purchased from Aldrich Chemical Co. and were purified by refluxing and distilling from CaH₂ under dry nitrogen. Dimethylamine (anhydrous) was purchased from Matheson and used without further purification. Methylaluminoxane (MAO) was purchased from Schering. Methylcyclopentadiene was obtained from the Chemical Sample Company and was distilled prior to use. Cyclopentadiene was obtained from The Dow Chemical Company. The complexes titanium tetrakis(dimethylamide), titanium tetrakis(diethylamide) and titanium tetrakis(dipropylamide) were prepared in the following manner.

### PREPARATION OF TITANIUM TETRAKIS(DIALKYLAMIDES)

### A. Preparation of titanium tetrakis(dimethylamide)

### Step (1) Preparation of lithium dimethylamide.

Dimethylamine was condensed into a 250 mL Schlenk flask at -20°C over Linde 4A molecular sieves. The liquid was maintained at or below -10°C to avoid vapor phase transition. A 1 liter Schlenk flask was charged with 350 mL of diethyl ether and fitted with a pressure equalizing dropping funnel and magnetic stir bar. The contents were cooled in a dry ice/acetone bath and maintained at or below -20°C for all additions. To the chilled diethyl ether in the 1000 mL flask was added n-butyllithium, 0.500 mole of 2.90 M solution in hexane. Diethyl ether, 150 mL, was added to the dropping funnel, which was jacketed with dry ice to maintain a liquid temperature below -20°C, followed by excess dimethylamine, 35 mL (0.528 mole). The dimethylamine was slowly dripped into the 1000 mL Schlenk flask over the course of one hour. A suspension of white pyrophoric powder was obtained which was determined to be lithium dimethylamide. The mixture was warmed to room temperature for one hour to devolatilize excess dimethylamine.

### Step (2) Preparation of titanium tetrakis(dimethylamide)

The same apparatus described in Step (1) of Example A was used in this procedure. The 250 mL pressure equalizing dropping funnel was charged with 100 mL of toluene and titanium tetrachloride, 12.4 mL (0.112 mole). The solution was added dropwise to the magnetically stirred suspension of lithium dimethylamide over the course of 0.5 hour at -20°C. A brown solution over insoluble lithium salts was obtained which was refluxed two hours. All volatiles were removed under vacuum at room temperature and the mixture was extracted twice with 200 mL portions of hexane. The salts were filtered from the solution and the extracts were combined. Solvent was distilled from the solution to give a dark orange oil. Distillation of the oil (boiling point = 60°C to 63°C @ 0.025 mm Hg) gave the orange liquid titanium tetrakis(dimethylamide) in 90% yield.

### B. Preparation of titanium tetrakis(diethylamide)

### Step (1) Preparation of lithium diethyamide.

To a 500 mL Schlenk flask was added 250 mL of diethyl ether which was chilled in a dry ice/acetone bath to -78°C. Next was added n-butyllithium, 0.300 mole of 2.90 M solution in hexane, and the contents were allowed to warm to -20°C. Diethylamine, freshly distilled from calcium hydride, 35 mL (0.34 mole), was added via a 250 mL pressure equalizing dropping funnel over the course of 30 minutes while stirring the mixture at -20°C. The contents were warmed to room temperature for one hour.

### Step (2) Preparation of titanium tetrakis(diethylamide)

The same apparatus described in Step (1) of Example B was used in this procedure. The 250 mL dropping funnel was charged with 50 mL of toluene and titanium tetrachloride, 7.7 mL (75 mmole), and added to the solution of lithium diethylamide, which was chilled to -78°C, over the course of 30 minutes. The mixture was warmed to room temperature then refluxed two hours. All volatiles were removed under vacuum and the residue was extracted twice with 100 mL portions of hexane and filtered from the lithium salts. The combined extracts were reduced in solvent volume then transferred to a small scale distillation apparatus. The complex titanium tetrakis(diethylamide) was distilled from the mixture at 103-105°C (0.025 mm Hg) to give approximately 8g of an orange liquid.

### C. Preparation of titanium tetrakis(di-n-propylamide)

### Step (1) Preparation of lithium di-n-propylamide.

A 1L Schlenk flask was equipped with a 250 mL pressure equalizing dropping funnel and magnetic stir bar was charged with 500 mL of diethyl ether. The contents were chilled to -78°C in a dry ice/acetone bath and n-butyllithium, 0.250 mole of a 2.81 M solution in hexane, was next added. A solution containing di-n-propylamine, 38 mL (0.277 mole), dissolved in 150 mL of diethyl ether was added dropwise to the n-butyllithium solution while the contents were stirred magnetically and allowed to slowly warm to room temperature. The contents were stirred overnight at room temperature to insure complete reactions.

### Step (2) Preparation of titanium tetrakis(di-n-propylamide)

The same apparatus described in Step (1) of Example C was used in this procedure. The 250 mL dropping funnel was charged with toluene, 100 mL, and titanium tetrachloride, 10.7 g (0.0562 mole). This was added dropwise to the flask containing lithium di-n-propylamide while stirring magnetically. Total additions times were typically 30 minutes. The mixture was refluxed for 1.5 hours. All volatiles were removed by distillation and under vacuum to give a deeply colored brown, oily residue. The residue was extracted with hexane, 2 x 150 mL, then filtered from the lithium salts. The extracts were combined and solvent was removed under vacuum. The remaining oil was transferred to a small scale distillation apparatus. Vacuum distillation at 157°C and 0.05 mm Hg gave the product as an orange-brown liquid, titanium tetrakis(di-n-propylamide).

Complexes were stored below -20°C for liquids or in an inert atmosphere box under nitrogen depending on thermal stability. Solids were stored in an inert atmosphere box under dry nitrogen. Polymerization compositions were diluted or mixed in a Vacuum Atmospheres dry box equipped with a recirculating catalyst train packed with 13X molecular sieves and a deoxygenation catalyst such as those available from Vacuum Atmospheres.

In the following examples, the melt index values I₂ and I₁₀ were determined by ASTM D 1238-86, condition "E" for I₂ and condition "N" for I₁₀, and the density values were determined by ASTM D 1248-84.

### EXAMPLE 1

### A. Preparation of indenyltitanium tris(dimethylamide), (Complex IA)

A 250 mL Schlenk flask was charged with toluene, 75 mL, and titanium tetrakis(dimethylamide), 2.35 g (10.48 mmole). The mixture was stirred magnetically throughout the procedure. Freshly degassed indene (nitrogen sparged) was added to the Schlenk flask at room temperature in excess, 2.44 mL (20.96 mmole). The mixture was refluxed at least 24 hours giving a blood red solution. All volatiles were removed under vacuum at room temperature leaving a deep red, oily residue. The residue was transferred in a minimum of hexane to a micro scale distillation apparatus and distilled under vacuum. A viscous red oil distills at 60°C (0.025 mm Hg) which was identified by nuclear magnetic resonance spectroscopy (NMR) as indenyltitanium tris(dimethylamide). The yield was 70% by this method of preparation.

### B. Preparation of indenyltitanium tris(dimethylamide), (Complex IB)

### Step (1): Preparation of chlorotitanium tris(dimethylamide).

The disproportionation product of titanium tetrakis(dimethylamide) with titanium tetrachloride was prepared in the following manner. A 250 mL Schlenk flask was charged with titanium tetrakis(dimethylamide), 7.74g (34 mmole) and toluene, 100 mL. To the magnetically stirred mixture was added titanium tetrachloride, 2.18g (12 mmole). The mixture was refluxed at least 1 hour resulting in a deep brown solution. All volatiles were removed under vacuum at room temperature leaving a yellow-brown powder. The powder was transferred in a dry box to a sublimation apparatus then heated under vacuum (0.05 mmHg). Yellow needles of chlorotitanium tris(dimethylamide) sublimed between 50°C and 70°C onto a dry ice cooled probe. Crystals were removed from the probe in a dry box and transferred to bottles for storage. The yield was 84% for this preparation.

### Step (2): Preparation of lithium indenide.

A 100 mL Schlenk flask was charged with diethyl ether, 50 mL, and n-butyllithium, 5.2 mL (13.88 mmole) of a 2.68 M solution in hexane) at -78°C. To the magnetically stirred, chilled solution was added nitrogen degassed indene, 1.8 mL (15.27 mmole). The mixture was stirred and warmed to room temperature over 1 to 2 hours. The mixture was stirred at least an additional 4 hours at room temperature to insure complete reaction prior to further use.

### Step (3): Reaction of lithium indenide with chlorotitanium tris(dimethylamide).

A 250 mL Schlenk flask was charged with chlorotitanium tris(dimethylamide), 2.72 g (12.62 mmole), and diethylether, 75 mL. The flask was chilled to -78°C and stirred magnetically while adding the solution containing lithium indenide (Step 2 of Example 1B). The mixture was warmed to room temperature then refluxed approximately 1.5 hours. All volatiles were removed under vacuum at room temperature leaving a deep red oily residue. The residue was extracted with hexane (1 X 50 mL) and the extract was filtered from the LiCl salts. All volatiles were removed under vacuum at room temperature leaving a viscous red oil. A proton NMR of the oil showed the product was sufficiently pure indenyltitanium tris(dimethylamide) and was used without further purification. Test for chloride showed it to be absent from the product. The yield was 95% for this preparative method.

### C. Preparation of indenyltitanium tris(diethylamide). (Complex II)

### Step (1): Preparation of chlorotitanium tris(diethylamide).

A 250 mL Schlenk flask was charged with toluene, 100 mL, and titanium tetrakis(diethylamide), 6.21 g (18.5 mmole). To the magnetically stirred solution was added titanium tetrachloride, 1.17 g (6.15 mmole) resulting in a gradual darkening of the solution. The mixture was stirred 1 hour while refluxing. All volatiles were removed under vacuum at room temperature leaving a yellow-brown oil. The oil was transferred to a micro distillation apparatus and distilled under vacuum. A yellow-brown liquid was obtained which distills at 112 to 118°C (at 0.025 mm Hg). The product was determined to be chloro-titanium tris(diethylamide).

### Step (2): Preparation of lithium indenide.

A 250 mL Schlenk flask was charged with diethyl ether, 100 mL, then chilled to -20°C. To the chilled solvent was added n-butyllithium, 5.4 mL of a 2.79 M in hexane (15 mmole). To the magnetically stirred mixture was added nitrogen degassed indene, 1.92 mL (16.5 mmole). The mixture was stirred overnight at room temperature.

### Step (3): Reaction of lithium indenide with chlorotitanium tris(diethylamide).

To a 100 mL Schlenk flask outfitted with a magnetic stir bar was added, in a dry box, chorotitanium tris(diethylamide), 4.05 g (13.5 mmole). The flask was transferred to a vacuum line and toluene, 50 mL, was added and the solution was stirred to dissolve all of the solid. The solution containing ClTi(NEt₂)₃ was transferred via canula on a vacuum line to the flask containing lithium indenide prepared in diethyl ether as described in Step (2) of Example 1C above. The mixture was refluxed 4 hours giving a deep yellow solution. All volatiles were removed under vacuum at room temperature leaving a darkly colored oil. The oil was extracted with hexane (1 X 50 mL) and the light yellow solid was allowed to separate from the red solution. Solvent was removed under vacuum leaving a deep red, viscous oil. An NMR was obtained of the oil which indicates the complex was pure indenyltitanium tris(diethylamide), therefore, it was used without further purification.

### D. Preparation of indenyltitanium tris(di-n-propylamide). (Complex III)

### Step (1): Preparation of chlorotitanium tris(di-n-propylamide).

A 250 mL Schlenk flask equipped with a magnetic stir bar was charged with titanium tetrakis(di-n-propylamide), 4.49 g (10.0 mmole), and toluene, 100 mL. Titanium tetrachloride, 0.63 g (3.34 mmole), was diluted in toluene, 50 mL, in a 100 mL Schlenk flask then added to the magnetically stirred flask containing titanium tetrakis(di-n-propylamide). The darkly colored solution was refluxed one hour then all volatiles were removed under vacuum. The product, chlorotitanium tris(di-n-propylamide) was used without further purification.

### Step (2): Preparation of lithium indenide.

A 100 mL Schlenk flask was charged with diethyl ether, 50 mL, and n-butyllithium, 5.22 mL (14.67 mmole) of a 2.81 M solution in hexane, at -78°C. To the magnetically stirred, chilled solution was added nitrogen degassed indene, 1.70 g (14.6 mmole). The mixture was stirred and warmed to room temperature over 1 to 2 hours. The solution was stirred at least an additional 4 hours at room temperature to insure complete reaction prior to further use.

### Step (3): Reaction of lithium indenide with chlorotitanium tris(di-n-propylamide).

To a 250 mL Schlenk flask was added chlorotitanium tris(di-n-propylamide), 6.18 g (13.34 mmole), in diethyl ether, 100 mL. Lithium indenide, 14.67 mmole, in diethyl ether was next added to the magnetically stirred solution containing the titanium complex. The reactants were combined at -20°C then allowed to warm to room temperature and stirred at least 12 hours. The mixture was refluxed for 45 minutes. All volatiles were removed under vacuum at room temperature. A deeply colored oily residue remained. The residue was extracted with hexane, 1 X 50 mL, which gave a blood red solution over white salts. Hexane was removed under vacuum leaving a darkly colored, viscous oil. The extract was placed under vacuum an additional 8 hours at 50°C (1 x 10⁻⁶ Torr) to remove unreacted indene. An NMR obtained of the residue indicated the material was sufficiently pure indenyltitanium tris(di-n-propylamide), Complex III, and was used without further purification.

### E. Preparation of cyclopentadienyltitanium tris(dimethylamide). (Complex IV)

A 250 mL Schlenk flask was charged with titanium tetrakis(dimethylamide), 2.48 g (11.06 mmole), and toluene, 100 mL. Freshly cracked cyclopentadiene monomer, 2.7 mL (33.18 mmole), was added to the magnetically stirred solution. The mixture was refluxed 1 hour which gave a deep red solution. All volatiles were removed under vacuum at room temperature leaving a viscous deep red oil. The oil was transferred to a microdistillation apparatus and a low melting solid was distilled at 70°C under vacuum (0.05 mm Hg). The product was determined to be cyclopentadienyltitanium tris(dimethylamide).

### F. Preparation of methylcyclopentadienyltitanium tris(dimethylamide). (Complex V)

A 250 mL Schlenk flask was charged with titanium tetrakis(dimethylamide), 3.73 g (16.64 mmole), and toluene, 100 mL. Methylcyclopentadiene, 5.33 g (66.54 mmole), was added to the magnetically stirred solution. The mixture was refluxed 1.5 hours. Solvent and volatiles were removed under vacuum leaving a brown residue. The residue was transferred to a microdistillation apparatus and a forerun of titanium tetrakis(dimethylamide) was distilled from the mixture (at 35 - 40°C and 0.025 mm Hg) followed by a red low melting solid (at 104 - 108°C and 0.025 mm Hg) which was determined to be methylcyclopentadienyltitanium tris(dimethylamide) by proton NMR.

### EXAMPLE 2 POLYMERIZATION

The following method was employed for the polymerization reaction and was used in all examples in Table I with the exception as noted for the low temperature runs. A stirred, one gallon (3.79 liter) batch reactor containing two liters of ISOPAR™E (a fractionated isoparaffinic solvent having a boiling range of 113-143°C available from Exxon Company USA, a division of Exxon Corporation) and optionally a comonomer, was heated to the desired polymerization temperature and the solvent vapor pressure recorded. To this an amount of hydrogen was optionally added which was recorded as the differential pressure drop from a 75 mL pressurized tank. The reactor was then pressurized with ethylene to give the final desired reactor pressure which was approximately 450 psig (3.10 MPa). An amount of catalyst was injected into the reactor determined by the total amount of product desired over time or until the catalyst was no longer active. For solution conditions the amount of catalyst injected or duration of the polymerization run was limited to avoid conditions in which the polymer precipitates from the solution phase. Ethylene reactor pressure was maintained at a constant level by a demand feed regulator to replace the ethylene consumed by the polymerization reaction. The total reaction time was held constant or varied based on desired yields of polymer. The results are given in Table I.

### EXAMPLE 3

### A. Preparation and activation of catalyst mixtures containing MAO cocatalyst.

Some examples containing MAO (methylaluminoxane) were prepared for polymerization as follows. The ratio of titanium (Ti) to aluminum (Al) was prepared as described using the appropriate volume of each component. The MAO and Ti complexes were combined in 4 oz (118 mL) catalyst bottles in a dry box prior to injection into the batch reactor.
(1) A stock solution of indenyltitanium tris(dimethylamide), complex IA, was prepared by dissolving 0.5 mmole in ISOPAR™E, 50 mL. To a 50 mL syringe was added 2.5 mL of the stock solution containing complex I, indenyltitanium tris(dimethylamide), and 50 mL of a 0.33 M solution of MAO cocatalyst. (Atomic ratio of Al:Ti = 1000:1)
(2) To a 50 mL syringe was added 3 mL of the stock solution from Example 3A-1 containing complex IA, indenyltitanium tris(dimethylamide), and 36 mL of a 0.33 M solution of MAO cocatalyst. (Atomic ratio of Al:Ti = 400:1)
(3) To a 10 mL syringe was added 4 mL of the stock solution from Example 3A-1 containing complex IA, indenyltitanium tris(dimethylamide), and 5 mL of a 0.33 M solution of MAO cocatalyst. (Atomic ratio of Al:Ti = 50:1)

### B. Preparation of nonactivated catalyst compositions.

An amount of catalyst was dissolved in ISOPAR™E to give a known concentration of the transition metal complex. An aliquot was injected in the reactor based on the formulated concentration to give the appropriate amount of transition metal complex expressed in µmole of Ti. The concentration of the complex in the inert diluent (ISOPAR™E) was completely arbitrary and not critical to catalyst preparation. The only consideration should be the volume of the injection pressure vessel which should accommodate the entire aliquot. Concentrations were adjusted to insure that the entire aliquot(s) of the catalyst component(s) were accommodated by the injection pressure vessel.
(1) 5 mL of a 0.01 M solution of catalyst complex was injected into the reactor.
(2) 5 mL of a 0.005 M solution catalyst complex was injected into the reactor.
(3) 0.009 g (30 µmole) of complex IA (indenyltitanium tris(dialkylamide)) was dissolved in approximately 10 mL ISOPAR™E and injected into the reactor.
(4) 20 mL of a 0.001 M solution of catalyst complex was injected into the reactor.
(5) A 0.001 M solution of complexes IB (indenyltitanium tris(dialkylamide)) and II (indenyltitanium tris(diethylamide)) were prepared and 20 mL of the blend was injected into the reactor.
(6) 10 mL of a 0.01 M solution of catalyst complex was injected into the reactor.
(7) A 0.002 M solution of complexes IB (indenyltitanium tris(dimethylamide)) and III (indenyltitanium tris(di-n-propylamide)) were prepared and 10 mL of each solution were blended in a 4 oz (118 mL) bottle. 20 mL of the blend was injected into the reactor.

The results are given in Table I.

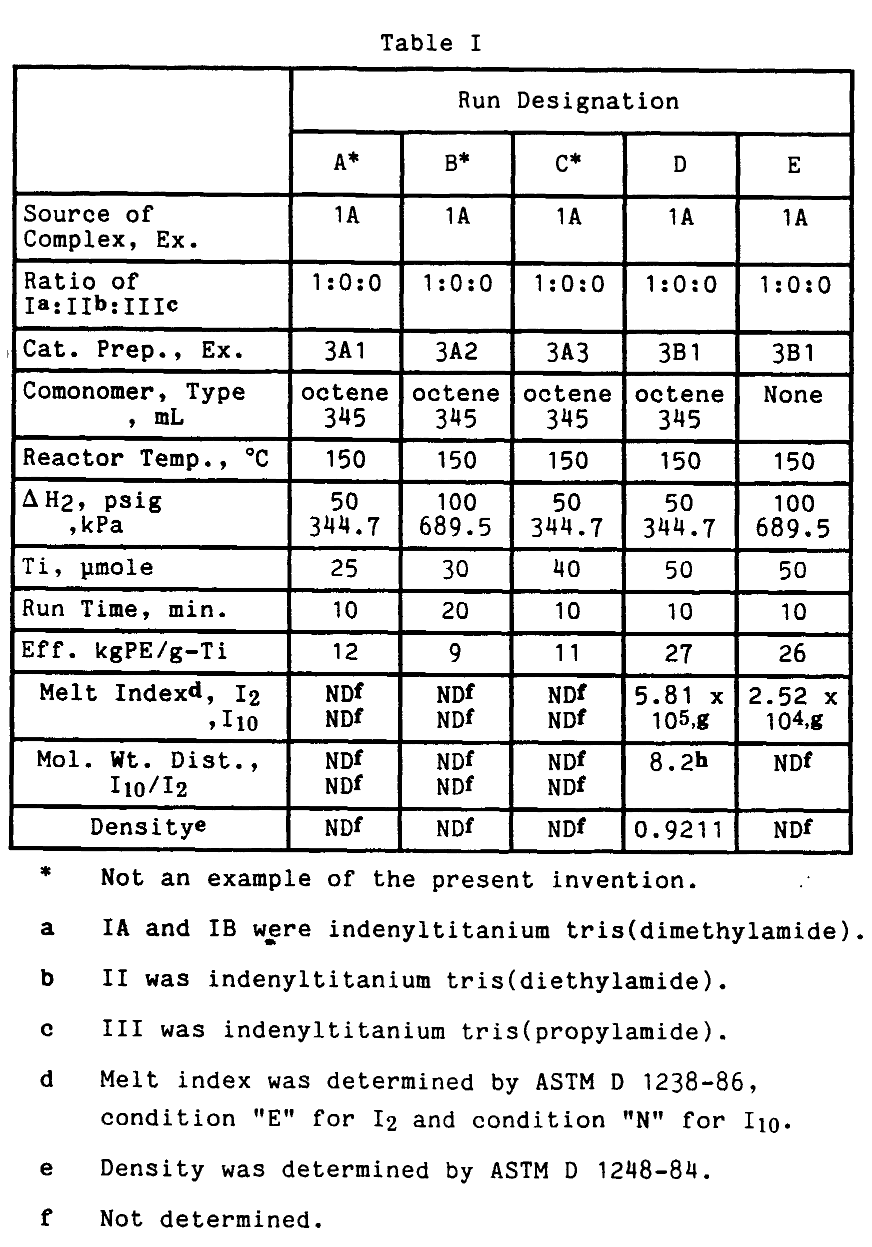

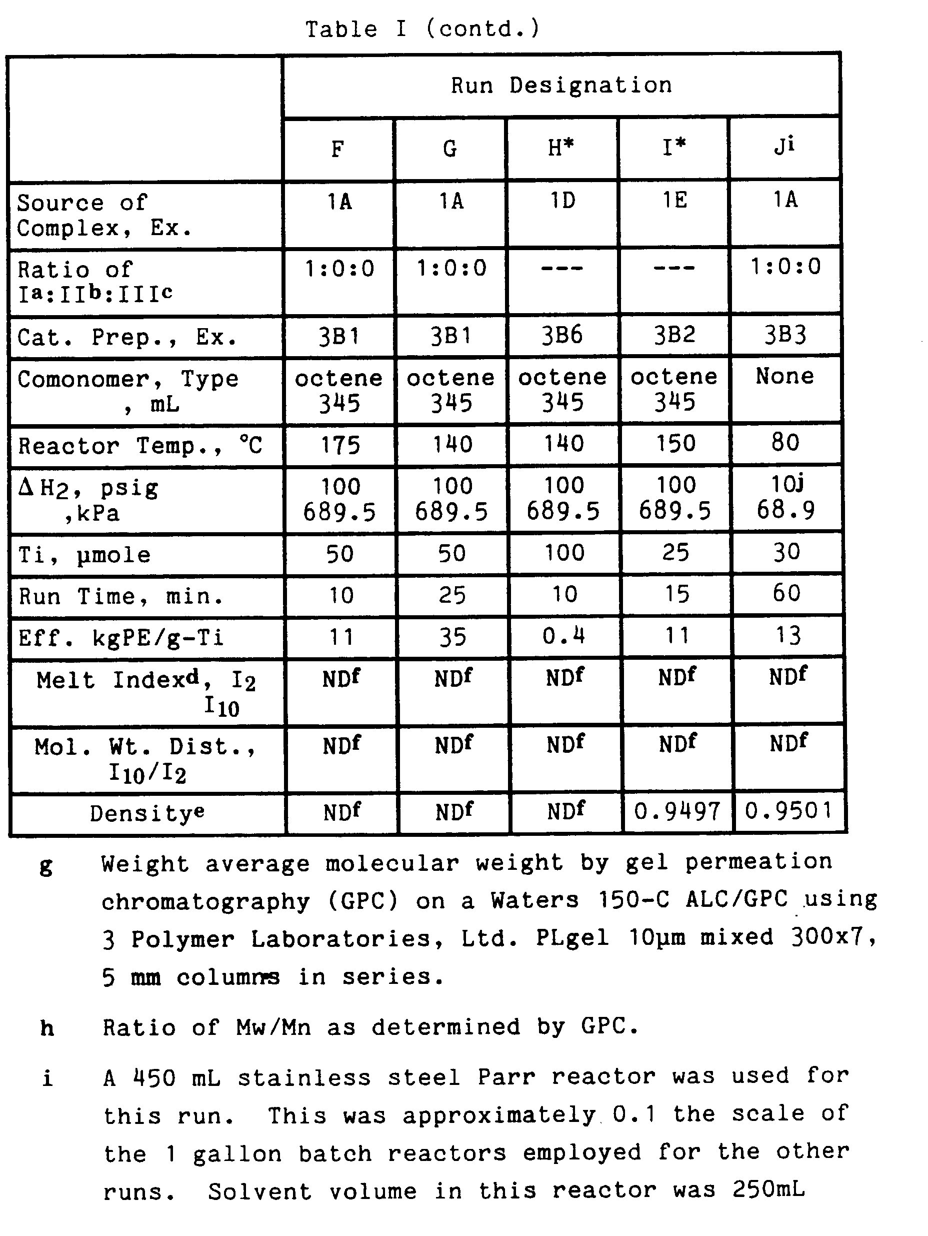

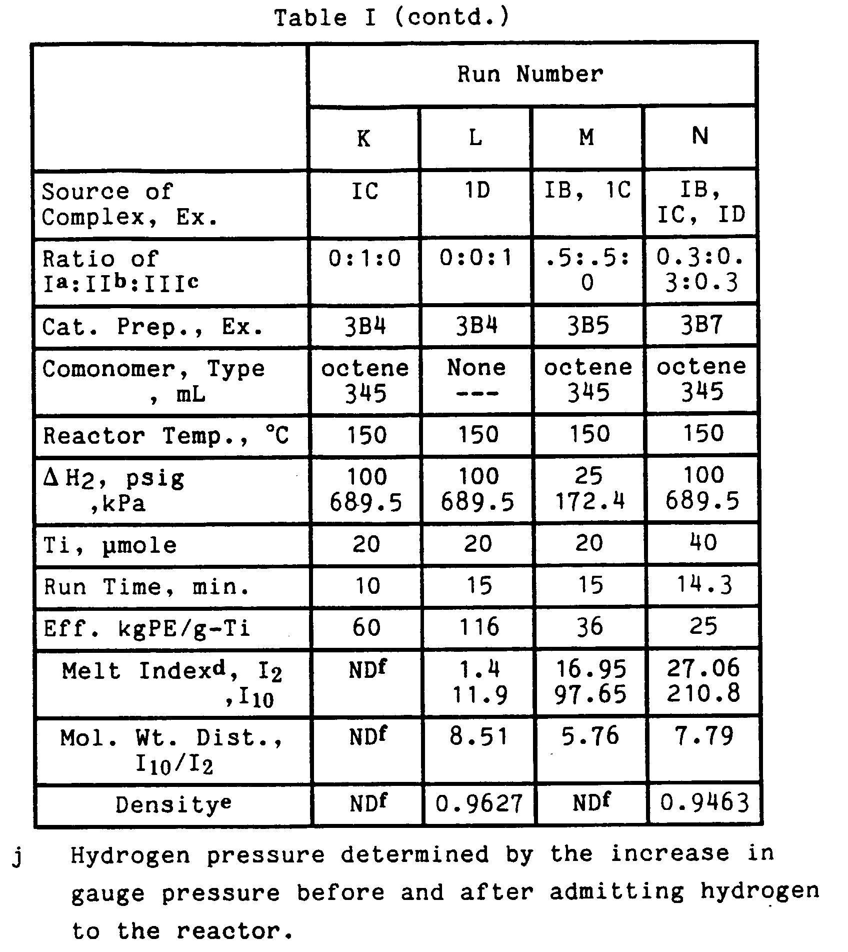

### PREPARATION OF MIXED TRIS(DIALKYLAMIDO)INDENYLTITANIUM COMPLEXES

### EXAMPLE 4

### A. Preparation of indenyltitanium bis(dimethylamide) diethylamide, VI.

### Step (1) Preparation of dichlorotitanium bis(dimethylamide).

A 250 mL Schlenk flask was charged with toluene, 150 mL, and titanium tetrakis(dimethylamide), 6.994 g (31.2 mmole). To the magnetically stirred mixture was added titanium tetrachloride, 5.92 g (31.2 mmole). The solution changes color immediately to a deep brown color. The mixture was refluxed with stirring approximately one hour. All volatiles were removed under vacuum (0.0025 mm Hg). The product was brown needles which sublimed horizontally at 55-60°C which corresponds to the properties observed by E. Benzing and W. Kornicker in Chem. Ber., vol. 94, pp 2263-2267 (1961) for Cl₂Ti(NMe₂)₂. Product yield was 10.69 g (53.0 mmole, 85%).

### Step (2) Preparation of lithium indenide.

A 500 mL Schlenk flask was charged with diethyl ether, 225 mL, and n-butyllithium, 13.6 mL of a 2.93 M solution in hexane (45 mmole). The mixture was stirred magnetically and chilled to -78°C in a dry ice/acetone bath. Indene, 5.25 mL (45 mmole), was added to the solution which was then allowed to warm to room temperature. The solution was stirred at least 12 hours at room temperature prior to further reaction. Titration of the sample showed the reaction was complete.

### Step (3) Reaction of lithium indenide with dichlorotitanium bis(dimethylamide).

A 500 mL Schlenk flask was charged with dichlorotitanium bis(dimethylamide), 7.24 g (35 mmole), and toluene, 100 mL. The mixture was stirred magnetically and chilled to -78°C in a dry ice/acetone bath. Lithium indenide (4A-2), 45 mmole, was added to the mixture which was then allowed to warm slowly to room temperature. The mixture was stirred approximately 15 hours at room temperature. All volatiles were removed under vacuum at room temperature giving a dark viscous oil. The residue was extracted with toluene (1 X 50 mL) and filtered. The solution was chilled to - 30°C resulting in the formation of red/orange needles. The product was isolated by decanting the solution then vacuum drying the crystalline product. A proton NMR of the product showed it was pure indenyltitanium bis(dimethylamide) chloride. A test for chloride confirms the presence of the halide in the product.

### Step (4) Preparation of lithium diethylamide.

A 100 mL Schlenk flask was charged with diethyl ether, 40 mL, then chilled to -78°C. n-Butyllithium, 0.73 mL of a 2.60 M solution in hexane (1.92 mmole), was added to the magnetically stirred flask followed by the addition of diethylamine, 0.22 mL (2.11 mmole). The contents of the flask were maintained at or below -20°C during this step. The mixture was warmed to room temperature and stirred at least 12 hours.

### Step (5) Reaction of indenyltitanium bis(dimethylamide) chloride with lithium diethylamide.

A 250 mL Schlenk flask was charged with indenyltitanium bis(dimethylamide) chloride, 0.5 g (1.74 mmole), and diethyl ether, 50 mL. The magnetically stirred mixture was chilled to -20°C while the solution of lithium diethylamide (4A-4) was added via canula. The solution was slowly warmed to room temperature and stirred at least 12 hours. The mixture was refluxed 1 hour. All volatiles were removed under vacuum at room temperature leaving an oily residue. The residue was extracted with hexane (1 X 50 mL) and filtered. Hexane was removed under vacuum leaving a red-brown oil which was placed under high vacuum (less than 1x10⁻⁶ Torr) for an additional 8 hours to remove free indene and any other moderately high boiling volatiles. Chloride analysis indicated no residual chloride was present in the product. NMR indicated the product was sufficiently pure for use without further purification. Yields for this reaction were typically in excess of 95%.

### B. Preparation of indenyltitanium bis(dimethylamide) di-n-propylamide, VII.

Indenyltitanium bis(dimethylamide)chloride prepared in Example 4A, steps 1-3 was used for this preparation as the starting material.

### Step (1) Preparation of lithium di-n-propylamide.

A 100 mL Schlenk flask was charged with diethyl ether, 50 mL, and n-butyllithium, 1.4 mL of a 2.76 M solution (3.84 mmole) in hexane, at -78°C. The magnetically stirred mixture was maintained at -78°C in a dry ice/acetone bath during the next step. To the flask was added di-n-propylamine, 0.6 mL (4.22 mL), and the mixture was warmed to room temperature. The mixture was stirred approximately 7 hours at room temperature.

### Step (2) Reaction of indenyltitanium bis(dimethylamide) chloride with lithium di-n-propylamide.

A 250 mL Schlenk flask was charged with indenyltitanium bis(dimethylamide) chloride, 1.00 g (3.49 mmole), and diethyl ether, 75 mL. The magnetically stirred mixture was maintained below -20°C in an ice bath during addition of lithium di-n-propylamide prepared in 4B-1. The contents of the flask were stirred an additional 8 hours at room temperature then refluxed 2 hours. All volatiles were removed under vacuum leaving a darkly colored viscous residue. The residue was extracted with hexane (1 x 50 mL) then filtered. Hexane was removed under vacuum at room temperature leaving a red-brown oil which was placed under high vacuum (1 x 10⁻⁶ Torr) to remove excess or free indene. Chloride analysis and NMR indicated the product was sufficiently pure indenyltitanium bis(dimethylamide) dipropylamide, VII, and was used for polymerization runs without further purification.

### C. Preparation of indenyltitanium bis(diethylamide) dimethylamide, VIII.

### Step (1) Preparation of dichlorotitanium bis(diethylamide).

A 250 mL Schlenk flask was charged with toluene, 150 mL, and titanium tetrakis(diethylamide), 9.49 g (28.2 mmoles). To the magnetically stirred mixture was added titanium tetrachloride, 5.35 g (28.2 mmole), resulting in the immediate formation of a brown solution. The mixture was stirred and refluxed 1 hour. All volatiles were removed under vacuum at room temperature leaving a brown oil. The oil was transferred to a short path microdistillation apparatus and the residue was distilled under vacuum. A red-brown oil was distilled from the residue at 95 - 103°C (0.05 mm Hg) which was determined to be TiCl₂(NEt₂)₂. The product yield was 78%.

### Step (2) Preparation of lithium indenide.

A 100 mL Schlenk flask was charged with diethyl ether, 50 mL, and n-butyllithium, 5.5 mL of a 2.78 M solution in hexane (16 mmoles), while stirring magnetically and maintaining the temperature at or below -20°C in a dry ice/acetone bath. Nitrogen degassed indene, 2.0 mL (16.8 mmole), was added to the chilled, stirred solution. The mixture was warmed to room temperature and stirred approximately 15 hours followed by refluxing for 1 hour. The reaction was assumed to be stoichiometric and complete based on titration data obtained from previous preparations of lithium indenide.

### Step (3) Reaction of lithium indenide with dichlorotitanium bis(diethylamide).

A 250 mL Schlenk flask was charged with dichlorotitanium bis(diethylamide), 4 g (15.20 mmole), and diethylether, 50 mL. The magnetically stirred mixture was chilled to below -78°C for the next step. Lithium indenide (16 mmoles), Example 4C step 2, was added to the 250 mL Schlenk flask via cannula and the mixture was allowed to slowly warm to room temperature. A reaction was apparent at -50°C by the formation of an orange precipitate. The mixture was stirred approximately 15 hours at room temperature then refluxed one hour. All volatiles were removed under vacuum at room temperature leaving a deep orange powder. The residue was extracted with hexane (5 x 50 mL) and each extract was filtered then combined. The solvent volume of the extracts was reduced under vacuum and chilled to -30°C. Orange crystals were obtained which were vacuum dried. An NMR of the product revealed it was pure indenyltitanium bis(diethylamide) chloride. The yield was 4.2 g or 81%.

### Step (4) Preparation of lithium dimethylamide.

A 100 mL Schlenk flask was charged with diethyl ether, 50 mL, then chilled to -78°C. To the magnetically stirred solvent was added n-butyllithium, 1.8 mL of a 2.78 M solution in hexane (5.04 mmole). Anhydrous dimethylamine, 0.4 mL (5.80 mmole) was added to the chilled solution via syringe. The mixture was warmed to room temperature then stirred 24 hours.

### Step (5) Reaction of lithium dimethylamide with indenyltitanium bis(diethylamide) chloride.

The flask containing lithium dimethylamide prepared as described in Example 4C, step 4, was chilled to -78°C in a dry ice/acetone bath. A 100 mL Schlenk flask was charged with (Ind)TiCl(NEt₂)₂, 1.5 g (4.38 mmoles), and diethyl ether, 25 mL. The mixture was stirred magnetically in order to dissolve the complex. The solution containing (Ind)TiCl(NEt₂)₂ was added, via canula, to the magnetically stirred suspension containing lithium dimethylamide, Example 4C, step 4. The mixture immediately darkened and was warmed to room temperature. The reaction mixture was refluxed 1 hour then stirred an additional 12 hours at room temperature. All volatiles were removed under vacuum at room temperature leaving a deep brown oily residue. The residue was placed under high vacuum (1 X 10⁻⁶ Torr) at room temperature for several hours in order to remove any unreacted volatiles, such as indene. The residue was extracted with hexane (1 X 50 mL) and all solvent was removed under vacuum leaving a deep red viscous liquid. The residue was again placed under high vacuum for several hours. An NMR of the residue showed the product to be primarily (Ind)Ti(NEt₂)₂(NMe₂), VIII. The yield was in excess of 95%.

### D. Preparation of indenyltitanium bis(diethylamide) di-n-propylamide, IX.

Indenyltitanium bis(diethylamide) chloride prepared in Example 4C, steps 1-3 was used for this preparation as the starting material.

### Step (1) Preparation of lithium di-n-propylamide.

A 100 mL Schlenk flask was charged with diethylether, 50 mL, and chilled to -78°C in a dry ice/actone bath. To the magnetically stirred flask was added n-butyllithium, 1.2 mL of a 2.78 M solution in hexane (3.21 mmole), followed by di-n-propylamine, 0.5 mL (3.53 mmole). The contents were warmed to room temperature then stirred an additional 15 hours.

### Step (2) Reaction of lithium di-n-propylamide with indenyltitanium bis(diethylamide) chloride.

A 250 mL Schlenk flask was charged with indenyltitanium bis(diethylamide) chloride, 1 g (2.92 mmole), and diethylether, 100 mL. The mixture was chilled to -78°C in a dry ice acetone bath and stirred magnetically. The lithium di-n-propylamide prepared in Example 4D, step 1, was added to the flask via cannula. The mixture was slowly warmed to room temperature while stirring. The mixture was then refluxed approximately 2 hours. All volatiles were removed under vacuum at room temperature leaving a deeply colored yellow-brown, viscous oil. The residue was placed under high vacuum, 1 x 10⁻⁶ Torr, for a few hours in order to remove any unreacted indene. Chloride analysis and NMR indicate the product was sufficiently pure indenyltitanium bis(diethylamide) di-n-propylamide, IX, and was used without further purification.

### EXAMPLE 5 POLYMERIZATION

Following was the method employed for the polymerization reaction and was used in all examples in Table II. A stirred, one gallon (3.79 liter) batch reactor containing two liters of ISOPAR■ E and optionally a comonomer was heated to the desired polymerization temperature and the solvent vapor pressure recorded. To this an amount of hydrogen was optionally added which was recorded as the differential pressure drop from a 75 mL pressurized tank. The reactor was then pressurized with ethylene to give the final desired reactor pressure which was approximately 450 PSIG (3.10 MPa). An amount of catalyst was injected into the reactor determined by the total amount of product desired over time or until the catalyst was no longer active. For solution conditions the amount of catalyst injected or duration of the polymerization run was limited to avoid conditions in which the polymer precipitates from the solution phase. Ethylene reactor pressure was maintained at a constant level by a demand feed regulator to replace the ethylene consumed by the polymerization reaction. The total reaction time was held constant or varied based on desired yields of polymer. The results were given in Table II.

### EXAMPLE 6 PREPARATION OF CATALYST COMPOSITIONS

An amount of catalyst was dissolved in ISOPAR™E to give a known concentration of the transition metal complex. An aliquot was injected into the reactor based on the formulated concentration to give the appropriate amount of transition metal complex expressed in µmole of Ti. The concentration of the complex in the inert diluent (ISOPAR™ E) was completely arbitrary and not critical to catalyst preparation. The only consideration should be the volume of the injection pressure vessel which should accommodate the entire aliquot. Concentrations were adjusted to insure that the entire aliquot(s) of the catalyst component(s) were accommodated by the injection pressure vessel.
(1) A 0.001 M solution of indenyltitanium bis(dimethylamide)diethylamide was prepared by dissolving 0.032 g (100 µmole) in Isopar™E, 100 mL. 20 mL of this solution was injected into the reactor.
(2) A 0.001 M solution of indenyltitanium bis(dimethylamide) diethylamide was prepared by dissolving 0.032 g (100 µmole) in Isopar™E, 100 mL. 40 mL of this solution was injected into the reactor.
(3) A 0.001 M solution of indenyltitanium bis(dimethylamide) di-n-propylamide was prepared by dissolving 0.035 g (100 µmole) in Isopar™E, 100 mL. 20 mL of this solution was injected into the reactor.
(4) A 0.002 M solution of indenyltitanium bis(diethylamide) dimethylamide was prepared by dissolving 0.035 g (100 µmole) in Isopar™E, 50 mL. 20 mL of this solution was injected into the reactor.
(5) A 0.002 M solution of indenyltitanium bis(diethylamide) di-n-propylamide was prepared by dissolving 0.041 g (100 µmole) in Isopar™E, 50 mL. 20 mL of this solution was injected into the reactor.

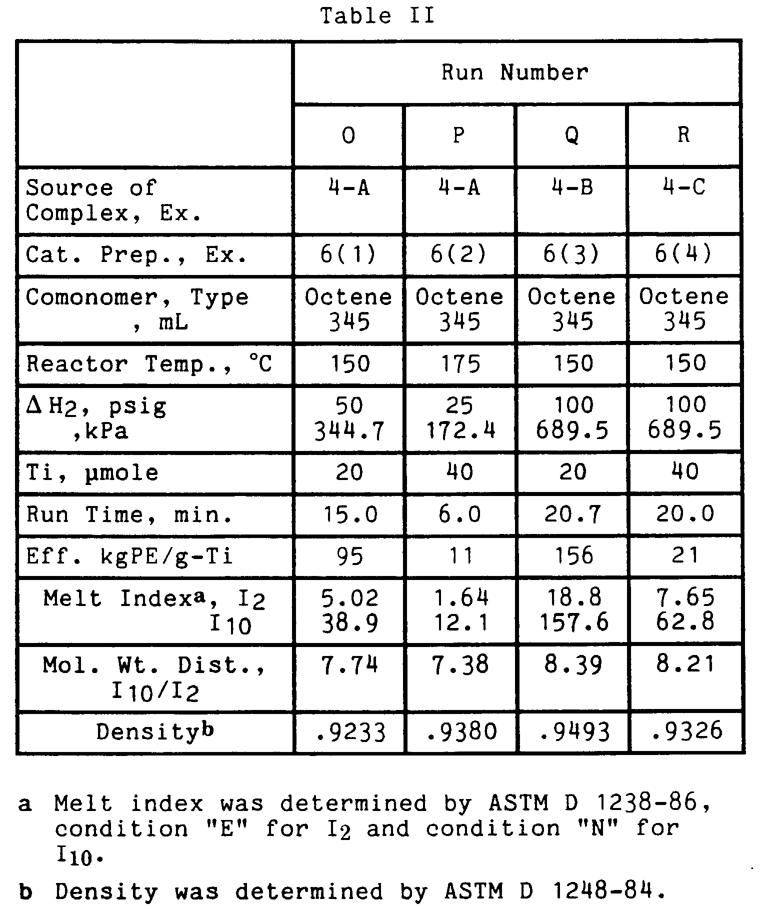

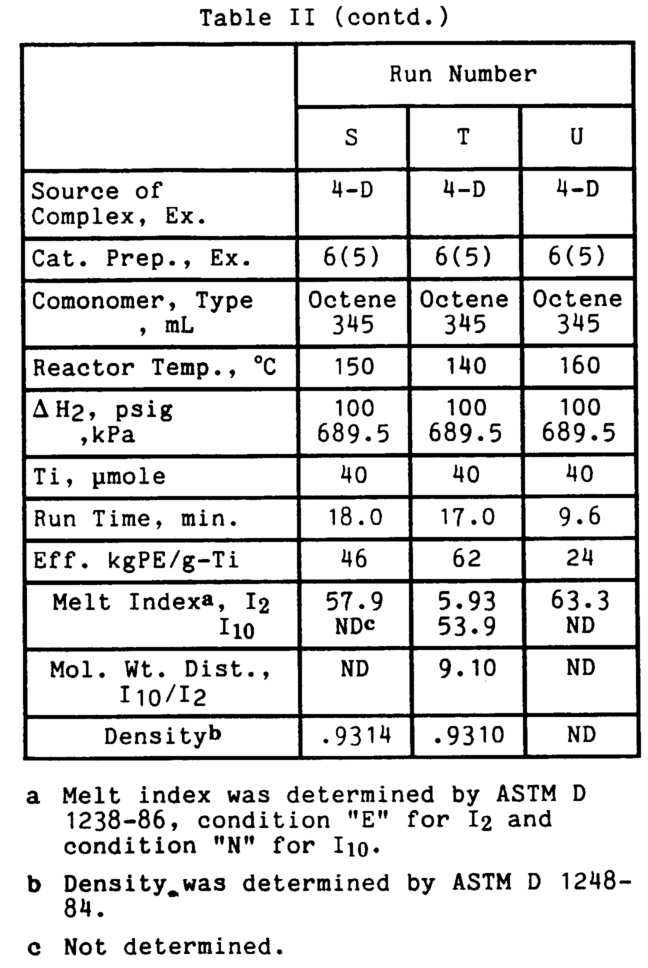

## Claims

1. A process for preparing catalytic compounds represented by the formula LTi(NR¹₂)₃ wherein L is a π-bonded ligand selected from the group consisting of indenyl, C₁-C₄ alkyl substituted indenyl, -OSiR₃ substituted indenyl, and each R¹ is the same and is a C₁-C₄ alkyl group which process is characterized by (1) reacting a compound represented by the formula Ti(NR¹₂)₄ wherein each R¹ is the same and is a C₁-C₄ alkyl group; with a compound represented by the formula R'(Ind) wherein R' is hydrogen, a C₁-C₄ alkyl group, - OSiR₃, -OR or a halogen; R is a C₁-C₄ alkyl group; and Ind is an indenyl group; and (2) recovering the desired product from the reaction mixture.

2. A process of Claim 1 wherein the components are combined at room temperature and then heated to the reflux temperature and L is indenyl and each R is independently methyl, ethyl or n-propyl.

3. A process for preparing catalytic compounds represented by the formula LTi(NR¹₂)₃ wherein L is a π-bonded ligand selected from the group consisting of indenyl, C₁-C₄ alkyl substituted indenyl, -OSiR₃ substituted indenyl; R¹ is a C₁-C₄ alkyl group; and each R¹ is the same and is a C₁-C₄ alkyl group; which process is characterized by (1) reacting a compound represented by the formula XTi(NR¹₂)₃ wherein each R¹ is the same and is a C₁-C₄ alkyl group; with a compound represented by the formula R'M(Ind) wherein M is an alkali metal; R' is hydrogen, a C₁ to C₄ alkyl group, -OSiR₃, -OR or a halogen; X is a halogen atom; and Ind is an indenyl group; and (2) recovering the desired product from the reaction mixture.

4. A process of Claim 3 wherein the components are combined at room temperature and then heated to the reflux temperature and M is K, Li or Na and R is methyl, ethyl or n-propyl.

5. A process for preparing compounds represented by the formula LTi(NR¹₂)X₂ wherein L is a π-bonded ligand selected from the group consisting of indenyl, C₁-C₄ alkyl substituted indenyl, -OSiR₃ substituted indenyl; each R¹ is the same and is a C₁-C₄ alkyl group; and X is a halogen; which process is characterized by (1) reacting a compound represented by the formula Ti(NR¹₂)X₃; wherein R¹ is a C₁-C₄ alkyl group; with a compound represented by the formula R'M(Ind) wherein R' is a hydrogen, a C₁-C₄ alkyl group, -OSiR₃, -OR or a halogen; Ind is an indenyl group; and M is an alkali metal; and (2) recovering the desired product from the reaction mixture.

6. A process of Claim 5 wherein the components are combined at room temperature and then heated to the reflux temperature and M is K, Li or Na and R is methyl, ethyl or n-propyl.

7. A process for preparing compounds represented by the formula LTi(NR¹₂)₂X wherein L is a π-bonded ligand selected from the group consisting of indenyl, C₁-C₄ alkyl substituted indenyl, -OSiR₃ substituted indenyl; each R¹ is the same and is a C₁-C₄ alkyl group; and X is a halogen; which process is characterized by (1) reacting a compound represented by the formula Ti(NR¹₂)₂X₂; wherein R¹ is a C₁-C₄ alkyl group; with a compound represented by the formula R'M(Ind) wherein R' is a hydrogen, a C₁-C₄ alkyl group, -OSiR₃, -OR or a halogen; Ind is an indenyl group; and M is an alkali metal; and (2) recovering the desired product from the reaction mixture.

8. A process of Claim 7 wherein the components are combined at room temperature and then heated to the reflux temperature and M is K, Li or Na and R is methyl, ethyl or n-propyl.

9. A process for preparing catalytic compounds represented by the formula LTi(NR¹₂)(NR²₂)X wherein L is a n-bonded ligand selected from the group consisting of indenyl, C₁-C₄ alkyl substituted indenyl, -OSiR₃ substituted indenyl; R¹ and R² are different and each R¹ and R² is independently a C₁-C₄ alkyl group; and X is a halogen; which process is characterized by (1) reacting any two compounds selected from the group consisting of (a) a compound represented by the formula Ti(NR¹₂)X₃, (b) M(NR²₂), and (c) R'(Ind)M wherein R' is hydrogen, a C₁-C₄ alkyl group, -OSiR₃, -OR or a halogen, Ind is an indenyl group, M is an alkali metal, and R is a C₁-C₄ alkyl group; (2) separating the reaction product from the reactants; (3) reacting the product from step (2) with the component (b) or (c) not reacted in step (1); and (4) recovering the desired product.

10. A process of Claim 9 wherein the components are combined at room temperature and then heated to the reflux temperature and M is K, Li or Na and R is methyl, ethyl or n-propyl.

11. A process for preparing catalytic compounds represented by the formula LTi(NR¹₂)₂(NR²₂) wherein L is a n-bonded ligand selected from the group consisting of indenyl, C₁-C₄ alkyl substituted indenyl, -OSiR₃ substituted indenyl; R¹ and R² are different and each R¹ and R² is independently a C₁-C₄ alkyl group; which process is characterized by (1) reacting any two compounds selected from the group consisting of (a) a compound represented by the formula Ti(NR¹₂)₂X₂, (b) M(NR²₂), and (c) R'(Ind)M wherein R' is hydrogen, a C₁-C₄ alkyl group, -OSiR₃, -OR or a halogen, Ind is an indenyl group, M is an alkali metal, R is a C₁-C₄ alkyl group and X is a halogen; (2) separating the reaction product from the reactants; (3) reacting the product from step (2) with the component (b) or (c) not reacted in step (1); and (4) recovering the desired product.

12. A process of Claim 11 wherein the components are combined at room temperature and then heated to the reflux temperature and M is K, Li or Na and R2 is methyl, ethyl or n-propyl.

13. A process for preparing catalytic compounds represented by the formula LTi(NH¹₂)(NH²₂)(NH³₂) wherein L is a π-bonded ligand selected from the group consisting of indenyl, C₁-C₄ alkyl substituted indenyl, -OSiR₃ substituted indenyl; and R¹, R² and R³ are different and are independently a C₁-C₄ alkyl group; which process is characterized by (1) reacting a compound represented by any one of the formula LTi(NR¹₂)(NR²₂)X wherein R¹ and R², are different and are each independently a C₁-C₄ alkyl group; X is a halogen, and L is as defined above; with a compound represented by the formula M(NR³₂) wherein R³ is a C₁-C₄ alkyl group different from R¹ and R², and M is Li, Na or K; and (2) recovering the desired product.

14. A process of Claim 13 wherein the components are combined at room temperature and then heated to the reflux temperature and M is K, Li or Na and R³ is methyl, ethyl or n-propyl.

## Patentansprüche

1. Verfahren zur Herstellung von katalytischen Verbindungen, dargestellt durch die Formel LTi(NR¹₂)₃, worin L ein π-gebundener Ligand ist, ausgewählt aus der Gruppe, bestehend aus Indenyl, C₁-C₄-Alkyl substituiertem Indenyl, -OSiR₃ substituiertem Indenyl und worin jedes R¹ das gleiche ist und eine C₁-C₄-Alkylgruppe ist, wobei das Verfahren gekennzeichnet ist durch (1) Umsetzen einer durch die Formel Ti(NR¹₂)₄ dargestellten Verbindung, worin jedes R¹ das gleiche ist und eine C₁-C₄-Alkylgruppe ist, mit einer Verbindung, dargestellt durch die Formel R'(Ind), worin R' Wasserstoff, eine C₁-C₄-Alkylgruppe, -OSiR₃, -OR oder ein Halogen ist; R eine C₁-C₄-Alkylgruppe ist und Ind eine Indenylgruppe ist; und (2) Gewinnen des gewünschten Produkts aus dem Reaktionsgemisch.

2. Verfahren nach Anspruch 1, worin die Komponenten bei Raumtemperatur vereinigt werden und dann auf die Rückflußtemperatur erhitzt werden, und L Indenyl ist und jedes R unabhängig Methyl, Ethyl oder n-Propyl ist.

3. Verfahren zur Herstellung von katalytischen Verbindungen, dargestellt durch die Formel LTi(NR¹₂)₃, worin L ein π-gebundener Ligand ist, ausgewählt aus der Gruppe, bestehend aus Indenyl, C₁-C₄-Alkyl substituiertem Indenyl, -OSiR₃ substituiertem Indenyl; R¹ eine C₁-C₄-Alkylgruppe ist; und jedes R¹ das gleiche ist und eine C₁-C₄-Alkylgruppe ist; wobei das Verfahren gekennzeichnet ist durch (1) Umsetzen einer durch die Formel XTi(NR¹₂)₃ dargestellten Verbindung, worin jedes R¹ das gleiche ist und eine C₁-C₄-Alkylgruppe ist, mit einer Verbindung, dargestellt durch die Formel R'M(Ind), worin M ein Alkalimetall ist; R' Wasserstoff, eine C₁-C₄-Alkylgruppe, -OSiR₃, -OR oder ein Halogen ist; X ein Halogenatom ist; und Ind eine Indenylgruppe ist; und (2) Gewinnen des gewünschten Produkts aus dem Reaktionsgemisch.

4. Verfahren nach Anspruch 3, worin die Komponenten bei Raumtemperatur vereinigt und dann auf die Rückflußtemperatur erhitzt werden und M K, Li oder Na ist und R Methyl, Ethyl oder n-Propyl ist.

5. Verfahren zur Herstellung von Verbindungen, dargestellt durch die Formel LTi(NR¹₂)X₂, worin L ein π-gebundener Ligand ist, ausgewählt aus der Gruppe, bestehend aus Indenyl, C₁-C₄-Alkyl substituiertem Indenyl, -OSiR₃ substituiertem Indenyl; worin jedes R¹ das gleiche ist und eine C₁-C₄-Alkylgruppe ist; und X ein Halogen ist, wobei das Verfahren gekennzeichnet ist durch (1) Umsetzen einer durch die Formel Ti(NR¹₂)X₃ dargestellten Verbindung, worin R¹ eine C₁-C₄-Alkylgruppe ist, mit einer Verbindung, dargestellt durch die Formel R'M(Ind), worin R' ein Wasserstoff, eine C₁-C₄-Alkylgruppe, -OSiR₃, -OR oder ein Halogen ist; Ind eine Indenylgruppe ist; und M ein Alkalimetall ist und (2) Gewinnen des gewünschten Produkts aus dem Reaktionsgemisch.

6. Verfahren nach Anspruch 5, worin die Komponenten bei Raumtemperatur vereinigt und dann auf die Rückflußtemperatur erhitzt werden und M K, Li oder Na ist und R Methyl, Ethyl oder n-Propyl ist.

7. Verfahren zur Herstellung von Verbindungen, dargestellt durch die Formel LTi(NR¹₂)₂X, worin L ein π-gebundener Ligand ist, ausgewählt aus der Gruppe, bestehend aus Indenyl, C₁-C₄-Alkyl substituiertem Indenyl, -OSiR₃ substituiertem Indenyl; jedes R¹ das gleiche ist und eine C₁-C₄-Alkylgruppe ist; und X ein Halogen ist, wobei das Verfahren gekennzeichnet ist durch (1) Umsetzen einer durch die Formel Ti(NR¹₂)₂X₂ dargestellten Verbindung, worin R¹ eine C₁-C₄-Alkylgruppe ist, mit einer Verbindung, dargestellt durch die Formel R'M(Ind), worin R' ein Wasserstoff, eine C₁-C₄-Alkylgruppe, -OSiR₃, -OR oder ein Halogen ist; Ind eine Indenylgruppe ist; und M ein Alkalimetall ist und (2) Gewinnen des gewünschten Produkts aus dem Reaktionsgemisch.

8. Verfahren nach Anspruch 7, worin die Komponenten bei Raumtemperatur vereinigt und dann auf die Rückflußtemperatur erhitzt werden und M K, Li oder Na ist und R Methyl, Ethyl oder n-Propyl ist.

9. Verfahren zur Herstellung katalytischer Verbindungen, dargestellt durch die Formel LTi(NR¹₂) (NR²₂)X, worin L ein π-gebundener Ligand ist, ausgewählt aus der Gruppe, bestehend aus Indenyl, C₁-C₄-Alkyl substituiertem Indenyl, -OSiR₃ substituiertem Indenyl; R¹ und R² verschieden sind und jedes R¹ und R² unabhängig eine C₁-C₄-Alkylgruppe ist; und X ein Halogen ist; wobei das Verfahren gekennzeichnet ist durch (1) Umsetzen von zwei beliebigen Verbindungen, ausgewählt aus der Gruppe, bestehend aus (a) einer Verbindung, dargestellt durch die Formel Ti(NR¹₂)X₃, (b) M(NR²₂) und (c) R'(Ind)M, worin R' Wasserstoff, eine C₁-C₄-Alkylgruppe, -OSiR₃, -OR oder ein Halogen ist, Ind eine Indenylgruppe ist, M ein Alkalimetall ist und R eine C₁-C₄-Alkylgruppe ist, (2) Abtrennen des Reaktionsproduktes von den Reaktanten; (3) Umsetzen des Produktes aus Schritt (2) mit der Komponente (b) oder (c), die in Schritt (1) nicht umgesetzt wurde und (4) Gewinnen des gewünschten Produktes.

10. Verfahren nach Anspruch 9, worin die Komponenten bei Raumtemperatur vereinigt und dann auf die Rückflußtemperatur erhitzt werden und M K, Li oder Na ist und R Methyl, Ethyl oder n-Propyl ist.

11. Verfahren zur Herstellung katalytischer Verbindungen, dargestellt durch die Formel LTi(NR¹₂)₂(NR²₂), worin L ein π-gebundener Ligand ist, ausgewählt aus der Gruppe, bestehend aus Indenyl, C₁-C₄-Alkyl substituiertem Indenyl, -OSiR₃ substituiertem Indenyl; R¹ und R² verschieden sind und jedes R¹ und R² unabhängig eine C₁-C₄-Alkylgruppe ist;
wobei das Verfahren gekennzeichnet ist durch (1) Umsetzen von zwei beliebigen Verbindungen, ausgewählt aus der Gruppe, bestehend aus (a) einer Verbindung, dargestellt durch die Formel Ti(NR¹₂)₂X₂, (b) M(NR²₂) und (c) R'(Ind)M, worin R' Wasserstoff, eine C₁-C₄-Alkylgruppe, -OSiR₃, -OR oder ein Halogen ist, Ind eine Indenylgruppe ist, M ein Alkalimetall ist, R eine C₁-C₄-Alkylgruppe ist und X ein Halogen ist; (2) Abtrennen des Reaktionsproduktes von den Reaktanten; (3) Umsetzen des Produktes aus Schritt (2) mit der Komponente (b) oder (c), die in Schritt (1) nicht umgesetzt wurde und (4) Gewinnen des gewünschten Produktes.

12. Verfahren nach Anspruch 11, worin die Komponenten bei Raumtemperatur vereinigt und dann auf die Rückflußtemperatur erhitzt werden und M K, Li oder Na ist und R Methyl, Ethyl oder n-Propyl ist.

13. Verfahren zur Herstellung katalytischer Verbindungen, dargestellt durch die Formel LTi(NR¹₂) (NR²₂) (NR³₂), worin L ein π-gebundener Ligand ist, ausgewählt aus der Gruppe, bestehend aus Indenyl, C₁-C₄-Alkyl substituiertem Indenyl, -OSiR₃ substituiertem Indenyl; und R¹, R² und R³ verschieden sind und unabhängig eine C₁-C₄-Alkylgruppe sind, wobei das Verfahren gekennzeichnet ist durch (1) Umsetzen einer Verbindung, die durch die Formel LTi(NR¹₂) (NR²₂)X dargestellt wird, worin R¹ und R² verschieden sind und jeweils unabhängig eine C₁-C₄-Alkylgruppe sind; X ein Halogen ist und L wie vorstehend definiert ist, mit einer Verbindung, dargestellt durch die Formel M(NR³₂), worin R³ eine C₁-C₄-Alkylgruppe ist, die verschieden von R¹ und R² ist und M Li, Na oder K ist und (2) Gewinnen des gewünschten Produktes.

14. Verfahren nach Anspruch 13, worin die Komponenten bei Raumtemperatur vereinigt und dann auf die Rückflußtemperatur erhitzt werden und M K, Li oder Na ist und R Methyl, Ethyl oder n-Propyl ist.

## Revendications

1. Procédé pour préparer des composés catalytiques répondant à la formule LTi(NR¹₂)₃ dans laquelle L représente un ligand à liaison π choisi dans l'ensemble constitué par les groupes indényle, indényle à substituant alkyle en C₁-C₄, indényle à substituant -OSiR₃, et chaque R¹ est identique et représente un groupe alkyle en C₁-C₄ ; lequel procédé est caractérisé par (1) la réaction d'un composé répondant à la formule Ti(NR¹₂)₄ dans laquelle chaque R¹ est identique et représente un groupe alkyle en C₁-C₄, avec un composé répondant à la formule R'(Ind) dans laquelle R' représente un atome d'hydrogène, un groupe alkyle en C₁-C₄, -OSiR₃, -OR ou un atome d'halogène, R représente un groupe alkyle en C₁-C₄ et Ind représente un groupe indényle, et (2) la récupération du produit voulu provenant du mélange réactionnel.

2. Procédé conforme à la revendication 1, dans laquelle les composants sont combinés à température ambiante puis chauffés à la température de reflux, et L représente un groupe indényle et chaque R représente indépendamment un groupe méthyle, éthyle ou n-propyle.

3. Procédé pour préparer des composés catalytiques répondant à la formule LTi(NR¹₂)₃ dans laquelle L représente un ligand à liaison π choisi dans l'ensemble constitué par les groupes indényle, indényle à substituant alkyle en C₁-C₄, indényle à substituant -OSiR₃, R¹ représente un groupe alkyle en C₁-C₄, et chaque R¹ est identique et représente un groupe alkyle en C₁-C₄ ; lequel procédé est caractérisé par (1) la réaction d'un composé répondant à la formule XTi(NR¹₂)₃ dans laquelle chaque R¹ est identique et représente un groupe alkyle en C₁-C₄, avec un composé répondant à la formule R'M(Ind) dans laquelle M représente un métal alcalin, R' représente un atome d'hydrogène, un groupe alkyle en C₁-C₄, -OSiR₃, -OR ou un atome d'halogène, X représente un atome d'halogène et Ind représente un groupe indényle, et (2) la récupération du produit voulu provenant du mélange réactionnel.

4. Procédé conforme à la revendication 3, dans lequel les composants sont combinés à température ambiante puis chauffés à la température de reflux, et M représente K, Li ou Na, et R représente un groupe méthyle, éthyle ou n-propyle.

5. Procédé pour préparer des composés répondant à la formule LTi(NR¹₂)X₂ dans laquelle L représente un ligand à liaison π choisi dans l'ensemble constitué par les groupes indényle, indényle à substituant alkyle en C₁-C₄, indényle à substituant -OSiR₃, chaque R¹ est identique et représente un groupe alkyle en C₁-C₄, et X représente un atome d'halogène ; lequel procédé est caractérisé par (1) la réaction d'un composé répondant à la formule Ti(NR¹₂)X₃ dans laquelle R¹ représente un groupe alkyle en C₁-C₄, avec un composé répondant à la formule R'M(Ind) dans laquelle R' représente un atome d'hydrogène, un groupe alkyle en C₁-C₄, -OSiR₃, -OR ou un atome d'halogène, Ind représente un groupe indényle, et M représente un métal alcalin, et (2) la récupération du produit voulu provenant du mélange réactionnel.

6. Procédé conforme à la revendication 5, dans lequel les composants sont combinés à température ambiante puis chauffés à la température de reflux, et M représente K, Li ou Na, et R représente un groupe méthyle, éthyle ou n-propyle.

7. Procédé pour préparer des composés répondant à la formule LTi(NR¹₂)₂X dans laquelle L représente un ligand à liaison π choisi dans l'ensemble constitué par les groupes indényle, indényle à substituant alkyle en C₁-C₄, indényle à substituant -OSiR₃, chaque R¹ est identique et représente un groupe alkyle en C₁-C₄, et X représente un atome d'halogène ; lequel procédé est caractérisé par (1) la réaction d'un composé répondant à la formule Ti(NR¹₂)₂X₂ dans laquelle R¹ représente un groupe alkyle en C₁-C₄, avec un composé répondant à la formule R'M(Ind) dans laquelle R' représente un atome d'hydrogène, un groupe alkyle en C₁-C₄, -OSiR₃, -OR ou un atome d'halogène, Ind représente un groupe indényle, et M représente un métal alcalin, et (2) la récupération du produit voulu provenant du mélange réactionnel.

8. Procédé conforme à la revendication 7, dans lequel les composants sont combinés à température ambiante puis chauffés à la température de reflux, et M représente K, Li ou Na, et R représente un groupe méthyle, éthyle ou n-propyle.

9. Procédé pour préparer des composés catalytiques répondant à la formule LTi(NR¹₂)(NR²₂)X dans laquelle L représente un ligand à liaison π choisi dans l'ensemble constitué par les groupes indényle, indényle à substituant alkyle en C₁-C₄, indényle à substituant. -OSiR₃, R¹ et R² sont différents et chacun des R¹ et R² représente indépendamment un groupe alkyle en C₁-C₄, et X représente un atome d'halogène ; lequel procédé est caractérisé par (1) la réaction de deux quelconques composés choisis dans l'ensemble constitué par (a) un composé répondant à la formule Ti(NR¹₂)X₃, (b) M(NR²₂) et (c) R'M(Ind) dans laquelle R' représente un atome d'hydrogène, un groupe alkyle en C₁-C₄, -OSiR₃, -OR ou un atome d'halogène, Ind représente un groupe indényle, M représente un métal alcalin, et R représente un groupe alkyle en C₁-C₄, (2) la séparation du produit réactionnel des réactifs, (3) la réaction du produit provenant de l'étape (2) avec le composant (b) ou (c) qui n'a pas réagi dans l'étape (1), et (4) la récupération du produit voulu.

10. Procédé conforme à la revendication 9, dans lequel les composants sont combinés à température ambiante puis chauffés à la température de reflux, et M représente K, Li ou Na, et R représente un groupe méthyle, éthyle ou n-propyle.

11. Procédé pour préparer des composés catalytiques répondant à la formule LTi(NR¹₂)₂(NR²₂) dans laquelle L représente un ligand à liaison π choisi dans l'ensemble constitué par les groupes indényle, indényle à substituant alkyle en C₁-C₄, indényle à substituant -OSiR₃, R¹ et R² sont différents et chacun des R¹ et R² représente indépendamment un groupe alkyle en C₁-C₄ ;
lequel procédé est caractérisé par (1) la réaction de deux quelconques composés choisis dans l'ensemble constitué par (a) un composé répondant à la formule Ti(NR¹₂)₂X₂, (b) M(NR²₂) et (c) R'M(Ind) dans laquelle R' représente un atome d'hydrogène, un groupe alkyle en C₁-C₄, -OSiR₃, -OR ou un atome d'halogène, Ind représente un groupe indényle, M représente un métal alcalin, R représente un groupe alkyle en C₁-C₄ et X représente un atome d'halogène; (2) la séparation du produit réactionnel des réactifs, (3) la réaction du produit provenant de l'étape (2) avec le composant (b) ou (c) qui n'a pas réagi dans l'étape (1), et (4) la récupération du produit voulu.

12. Procédé conforme à la revendication 11, dans lequel les composants sont combinés à température ambiante puis chauffés à la température de reflux, et M représente K, Li ou Na, et R² représente un groupe méthyle, éthyle ou n-propyle.

13. Procédé pour préparer des composés catalytiques répondant à la formule LTi(NR¹₂)(NR²₂)(NR³₂) dans laquelle L représente un ligand à liaison π choisi dans l'ensemble constitué par les groupes indényle, indényle à substituant alkyle en C₁-C₄, indényle à substituant -OSiR₃, et R¹, R² et R³ sont différents et représentent indépendamment un groupe alkyle en C₁-C₄ ; lequel procédé est caractérisé par (1) la réaction d'un composé répondant à l'une quelconque des formules LTi(NR¹₂)(NR²₂)X, dans laquelle R¹ et R² sont différents et représentent chacun indépendamment un groupe alkyle en C₁-C₄, X représente un atome d'halogène et L est tel que défini ci-dessus, avec un composé répondant à la formule M(NR³₂) dans laquelle R³ représente un groupe alkyle en C₁-C₄ différent de R¹ et de R², et M représente Li, Na ou K, et (2) la récupération du produit voulu.

14. Procédé conforme à la revendication 13, dans lequel les composants sont combinés à température ambiante puis chauffés à la température de reflux, et M représente K, Li ou Na, et R³ représente un groupe méthyle, éthyle ou n-propyle.
